# EUROPÄISCHE PATENTSCHRIFT

(11) **EP 2 320 705 B1**
(45) Veröffentlichungstag und Bekanntmachung des Hinweises auf die Patenterteilung: **13.03.2013**
(21) Anmeldenummer: 09175285.7
(22) Anmeldetag: 06.11.2009
(51) Int. Cl.: H04W 52/02

(54) **Differenzierung zwischen mobilen und stationären Mobilfunk-Endgeräten**
Differentiation between mobile and stationary mobile radio terminals
Différenciation entre des terminaux de radio mobile mobiles et fixes

(43) Veröffentlichungstag der Anmeldung: 11.05.2011
(73) Patentinhaber: Cinterion Wireless Modules GmbH, 81541 München (DE)
(72) Erfinder: Wehmeier, Lars, 14612 Falkensee (DE); Breuer, Volker, 16727, Bötzow (DE)
(74) Vertreter: Eisenführ, Speiser & Partner

(56) Entgegenhaltungen:
- EP-A1- 1 583 257
- WO-A1-2007/080399
- WO-A1-2007/088381
- WO-A2-02/03719
- US-A1- 2005 009 548
- US-A1- 2007 287 476
- US-B1- 6 269 250

## Beschreibung

Die vorliegende Erfindung betrifft ein Mobilfunk-Endgerät und ein Betriebsverfahren für ein Mobilfunk-Endgerät. Sie betrifft auch eine Basisstation und ein Betriebsverfahren für eine Basisstation sowie eine Mobilfunk-Infrastruktur und ein Betriebsverfahren für eine Mobilfunk-Infrastruktur.

Aus der WO 00/13377 ist bekannt, dass ein Mobilfunk-Endgerät eine geeignete Mobilfunkzelle nach der empfangenen Signalstärke auswählt. Wenn eine geeignete Zelle gefunden ist, meldet sich das Mobilfunk-Endgerät über die betreffende Zelle beim zugeordneten Access-Netzwerk an. Eine hierzu verwendete Basisstation wird dann vom Mobilfunk-Endgerät als die derzeit versorgende/selektierte Basisstation genutzt. Das Mobilfunk-Endgerät prüft auch nach der Anmeldung in einer bestimmten Zelle regelmäßig, ob es eine Mobilfunkzelle mit besserem Empfang gibt. Wenn dies der Fall ist, wird diese bessere Zelle ausgewählt.

Messungen für eine solche Endgerät-gestützte Zellauswahl (engl. cell reselection) werden in allen Zuständen des Mobilfunk-Endgerätes, in denen das UE einen autonomen, Zellwechsel durchführen kann, vorgenommen. Neben einem inaktiven, als "IDLE" bezeichneten Zustand können dies weitere in UMTS oder anderen Mobilfunktechnologien bekannte Zustände sein, wie z. B. Cell PCH,URA-PCH. Dieser inaktive Zustand wird periodisch unterbrochen, um zu prüfen, ob an das Mobilfunk-Endgerät gerichtete Signale von der Basisstation her empfangen werden. Typischerweise handelt es sich bei solchen Signalen um Paging-Signale, die auf einem speziellen Signalisierungskanal übertragen werden. Die Paging-Signale werden zu bestimmten Zeitpunkten gesendet. Der Zeitabstand zwischen aufeinanderfolgenden Übertragungen von Paging-Signalen definiert eine sogenannte diskontinuierliche Empfangs-Periode (engl. discontinuous reception period, kurz DRX-period). WO 00/13377 beschreibt, dass die DRX-Periodendauer unterschiedlich lang sein kann und schlägt vor, die Anzahl der Messungen für die Zellen-Auswahl entsprechend der jeweiligen DRX-Periodendauer zu wählen.

Innerhalb einer Zelle ist die Periodendauer des DRX-Zyklus jedoch für alle Mobilfunk-Endgeräte, die sich in einem Zustand mit der Möglichkeit einer autonomen Zellauswahl befinden, identisch. Dies gilt sowohl für Mobilfunkstandards der zweiten Generation (GSM) als auch für Mobilfunkstandards der dritten Generation (UMTS). Die DRX-Periodendauer wird typischerweise in Abhängigkeit von den Eigenheiten einer bestimmen Mobilfunkzelle, beispielsweise einer Umgebung, in der sich diese Zelle befindet, abhängig gemacht. So wird in einer städtischen Umgebung eine kürzere DRX-Periodendauer gewählt, um zu ermöglichen, dass Mobilfunk-Endgeräte, die in kurzer Zeit zu einer anderen Zelle wechseln müssten, beispielsweise beim Übergang in eine U-Bahn-Station, diesen Wechsel ohne spürbare Verzögerungen vollziehen können. Dagegen können Mobilfunkzellen in solchen Umgebungen, die einen längeren parallelen Empfang der versorgenden Zelle und einer Nachbarzelle ermöglichen und somit eine längere Zeit für einen verzögerungsfreien Zellwechsel bereitstellen, einen längeren DRX-Zyklus vorschreiben. Insbesondere kann es sich dabei um Mobilfunkzellen mit geographisch größerer Ausdehnung handeln. In diesen hat ein Mobilfunk-Endgerät typischerweise eine längere Verweildauer.

Nachteilig ist, dass auf diese Weise Mobilfunk-Endgeräten unabhängig vom Verhalten ihres Nutzers und unabhängig von ihrem Verwendungszweck eine DRX-Periodendauer zugewiesen wird, die möglicherweise unangemessen kurz oder unangemessen lang ist. So wird beispielsweise ein Verkaufsautomat, der über Funkmodem mit einer Service-Zentrale verbunden ist und in einer städtischen Umgebung aufgestellt ist, unnötigerweise mit einer sehr kurzen DRX-Periodendauer arbeiten müssen. Dies bedingt ein häufiges Aktivieren des Funkmodems aus dem inaktiven Zustand, und erfordert auch eine Messung benachbarter Zellen mit einer entsprechenden Periodizität, die für das Funkmodem in dieser Anwendung unangemessen klein ist.

Da in Abhängigkeit von der DRX-Periodendauer die Dauer der Zeitspannen von Aktivität und Inaktivität eines Mobilfunk-Endgeräts festgelegt ist, ist im Ergebnis der mittlere Stromverbrauch eines Mobiffunk-Endgeräts umso höher, je kleiner die DRX-Periodendauer ist.

Aus dem Dokument WO 2007/088381 ist es bekannt, netzseitig für ein Mobilfunk-Endgerät die DRX-Periodendauer in Abhängigkeit von einem ermittelten Bewegungsindikator des Mobilfunk-Endgeräts anzupassen und an das Mobilfunk-Endgerät zu übermitteln. Der Bewegungsindikator ist ein Zustandsparameter, der angibt, mit welcher Geschwindigkeit das Mobilfunk-Endgerät aktuell bewegt wird. Er wird entweder netzseitig oder durch das Mobilfunk-Endgerät selbst ermittelt.

Das der vorliegenden Erfindung zugrunde liegende technische Problem ist es, ein Mobilfunk-Endgerät, ein Betriebsverfahren für ein Mobilfunk-Endgerät, eine Basisstation und ein Betriebsverfahren für eine Basisstation, eine Mobilfunk-Infrastruktur und ein Betriebsverfahren für eine Mobilfunk-Infrastruktur anzugeben, die ein an die tatsächliche Nutzung des Mobilfunk-Endgeräts angepasstes Steuerungsverhalten ermöglichen.

Gemäß einem ersten Aspekt der vorliegenden Erfindung wird ein Betriebsverfahren für ein Mobilfunk-Endgerät angegeben, bei dem eine Ausführung mindestens eines Verfahrensschritts in Abhängigkeit von einem dem Mobilfunk-Endgerät zugeordneten Geräteparameter gesteuert wird, der genau einen von zwei möglichen Geräteparameter-Werten hat, die anzeigen, ob das Mobilfunk-Endgerät dauerhaft ortsfest oder nicht dauerhaft ortsfest ist.

Das Betriebsverfahren für ein Mobilfunk-Endgerät umfasst ein periodisches Unterbrechen eines inaktiven Zustandes des Mobilfunk-Endgeräts zum Prüfen, ob an das Mobilfunk-Endgerät gerichtete Signale von einer externen Basisstation her empfangen werden, wobei das periodische Prüfen in Zeitabständen einer dem Mobilfunk-Endgerät individuell zugeordneten Periodendauer durchgeführt wird. Die Periodendauer ist von dem Geräteparameter-Wert abhängt, der anzeigt, ob das Mobilfunk-Endgerät dauerhaft ortsfest oder nicht dauerhaft ortsfest ist.

Das Mobilfunk-Endgerät übermittelt bei dem erfindungsgemäßen Betriebsverfahren während oder nach einer Anmeldung des Mobilfunk-Endgeräts bei der externen Basisstation den genannten, dem Mobilfunk-Endgerät zugeordneten Geräteparameter an die externe Basisstation, der genau einen von zwei möglichen Geräteparameter-Werten hat, die anzeigen, ob das Mobilfunk-Endgerät dauerhaft ortsfest oder nicht dauerhaft ortsfest ist.

Das erfindungsgemäße Betriebsverfahren ermöglicht eine Steuerung des Betriebs eines Mobilfunk-Endgeräts in Abhängigkeit von der für viele Anwendungszusammenhänge bedeutsamen Tatsache, ob es sich bei dem Mobilfunk-Endgerät um ein dauerhaft ortsfestes Gerät handelt oder nicht.

Dem Betriebsverfahren des ersten Aspekts der Erfindung liegt die Erkenntnis zugrunde, dass Mobilfunk-Kommunikation verstärkt auch von dauerhaft ortsfesten Endgeräten genutzt wird, für die Mobilfunk-Netze - wie der Name sagt - nicht entwickelt wurden. Diese dauerhaft ortsfesten Mobilfunk-Endgeräte müssen aber aufgrund der bestehenden Signalisierungsprotokolle dieselben Prozeduren durchführen, die bewegte Mobilfunk-Endgeräte durchführen, um auch bei Bewegung ohne Unterbrechung Kontakt zum Mobilfunk-Netz halten zu können. Beispielsweise erfordern beim Stand der Technik Verfahren zur Mobilitätsunterstützung in quasi-IDLE-Zuständen, die auf einer von dem Mobilfunk-Endgerät kontrollierten Zellauswahl (cell reselection) basieren, regelmäßige Messungen, deren Häufigkeit von Zellparametern wie dem DRX-Zyklus abhängt, egal ob das Mobilfunk-Endgerät dauerhaft ortsfest ist oder nicht. Solche Prozeduren sind jedoch für dauerhaft ortsfeste Mobilfunk-Endgeräte oft nicht notwendig oder könnten von ihnen auf andere, weniger Energie erfordernde Weise durchgeführt werden. Der bekannte Stand der Technik bietet keine Methode, solchen Unterschieden zwischen dauerhaft ortsfesten und nicht dauerhaft ortsfesten Mobilfunk-Endgeräten Rechnung zu tragen.

Mit dem erfindungsgemäßen Betriebsverfahren kann in Ausführungsbeispielen nicht nur Energie für den Betrieb des Mobilfunk-Endgeräts gespart, sondern zugleich auch eine Entlastung der Mobilfunk-Infrastruktur erzielt werden.

Es sei angemerkt, dass die in der vorliegenden Beschreibung und in den Ansprüchen für Netzwerkknoten verwendeten Begriffe nicht als Beschränkung der Anwendbarkeit der Erfindung auf einen bestimmten Mobilfunkstandard zu verstehen ist. Der Begriff Basisstation wird beispielsweise in einem Sinne verwendet, der Ausführungsbeispiele sowohl nach einem 2G-Mobilfunk-Standard wie GSM, als auch nach einem 3G-Mobilfunk-Standard wie UMTS, als auch nach einem anderen oder zukünftigen Standard abdeckt. Die Anwendbarkeit der Erfindung beschränkt sich auch nicht auf Mobilfunk-Endgeräte in Wide-Area-Mobilfunknetzwerken, wie sie von GSM und UMTS unterstützt werden. Sie kann gleichermaßen auch in lokalen Mobilfunk-Netzwerken wie Pikozellen, WLAN, WiFi o.ä. Anwendung finden.

Nachfolgend werden Ausführungsbeispiele des erfindungsgemäßen Betriebsverfahrens erläutert. Die zusätzlichen Merkmale der hier beschriebenen Ausführungsbeispiele können miteinander kombiniert werden, um weitere Ausführungsbeispiel zu bilden, soweit die jeweiligen Ausführungsbeispiele nicht ausdrücklich als Alternativen zueinander beschrieben sind.

Die Zuordnung des Geräteparameters als "dauerhaft ortsfest" oder "nicht dauerhaft ortsfest", also die Unterscheidung zwischen "dauerhaft" und "nicht dauerhaft", bezieht sich in unterschiedlichen Varianten der Erfindung auf unterschiedlich lange Zeitspannen,

In einer Ausführungsform ist "dauerhaft ortsfest" so zu verstehen, dass das betreffende Mobilfunk-Endgerät zumindest für die Dauer der Anmeldung bei der aktuellen Mobilfunkzelle ortsfest ist. Eine gewünschte Änderung des Parameterwerts ist bei dieser Ausführungsform mit einer Abmeldung und Neuanmeldung bei dieser Mobilfunkzelle oder mit einer Neuanmeldung bei einer anderen Mobilfunkzelle verbunden. Jedenfalls kann also in der Signalisierung zwischen Mobilfunk-Endgerät und der betreffenden Basisstation für die Dauer der wechselseitigen Zuordnung nach einer Anmeldung davon ausgegangen werden, dass das Mobilfunk-Endgerät als dauerhaft ortsfest oder nicht dauerhaft ortsfest zu behandeln ist und selbst entsprechende Betriebsverfahren anwendet. Eine dynamische Veränderung des Geräteparameter-Wertes während der Zuordnung zu einer bestimmten Mobilfunkzelle ist bei dieser Ausführungsform nicht vorgesehen.

In einer Variante ist dagegen auch eine dynamische Veränderbarkeit des Geräteparameter-Wertes vorgesehen. Bei dieser Variante kann die Zuordnung dauerhaft ortsfest/nicht dauerhaft ortsfest auch während der Zuordnung zu einer bestimmten Basisstation ohne Neuanmeldung oder einen vergleichbar aufwändigen Signalisierungsprozess variieren. So kann beispielsweise ermöglicht werden, dass ein sich in einem Fahrzeug befindliches Mobilfunk-Endgerät, etwa in Form eines eingebauten Moduls, nur bei Fahrzeug-Aus als dauerhaft ortsfest registriert und betrieben wird.

In einer anderen Variante ist der Geräteparameter ein im Betrieb fest zugeordneter Wert, der nicht im Rahmen der Ausführung eines Betriebsverfahrens des Mobilfunk-Endgeräts verändert werden kann. Soll eine Veränderung des Geräteparameter-Wertes trotzdem ermöglicht werden, so kann in dieser Variante eine Änderung des Geräteparameter-Wertes beispielsweise durch eine manuell veranlasste Einstellung am Mobilfunk-Endgerät oder in einer Datenbank eines dem Mobilfunk-Endgerät zugeordneten Infrastruktur-Knotens wie beispielsweise dem Home Location Register (HLR) oder einer vergleichbaren Datenbank.

Die nachfolgende Beschreibung weiterer Ausführungsbeispiele gliedert sich in drei Gruppen von Ausführungsbeispielen, die hier als unterschiedliche Anwendungszusammenhänge bezeichnet des erfindungsgemäßen Betriebsverfahrens für ein Mobilfunk-Endgerät betreffen. Das Betriebsverfahren kann die unterschiedlichen Anwendungszusammenhänge in Kombination abdecken, so dass eine Kombination von Ausführungsbeispielen der nachfolgend unterschiedlichen Anwendungszusammenhänge des erfindungsgemäßen Betriebsverfahrens möglich ist. Es ist jedoch auch möglich, das Betriebsverfahren in nur einem oder zwei Anwendungszusammenhängen zu verwenden.

Bei Ausführungsbeispielen eines ersten Anwendungszusammenhangs, welcher Gegenstand des beanspruchten Betriebsverfahrens ist, umfasst das Betriebsverfahren ein periodisches Unterbrechen eines inaktiven Zustandes des Mobilfunk-Endgeräts zum Durchführen einer jeweils Prüfung, ob aktuell an das Mobilfunk-Endgerät gerichtete Signale von einer externen Basisstation her empfangen werden, wobei dieses periodische Prüfen mit einer dem Mobilfunk-Endgerät individuell zugeordneten Periodendauer durchgeführt wird, die von dem Geräteparameter-Wert abhängt, der anzeigt, ob das Mobilfunk-Endgerät dauerhaft ortsfest oder nicht dauerhaft ortsfest ist.

Mit diesem erfindungsgemäßen Betriebsverfahren für ein Mobilfunk-Endgerät gelingt es, eine auf die tatsächliche Nutzung des Mobilfunk-Endgeräts individuell zugeschnittene Periodendauer des Prüfens auf Empfang von Signalen im inaktiven Zustand zu realisieren. Auf diese Weise kann bei Mobitfunk-Endgeräten, die eine lange Periodendauer nutzen können, der Energieverbrauch im inaktiven Zustand deutlich gesenkt werden. Dies ist nicht nur bei Akku-betriebenen Mobilfunk-Endgeräten von Vorteil, bei denen unter Nutzung des erfindungsgemäßen Betriebsverfahrens die Betriebsdauer zwischen dem Aufladen des Akkus erhöht werden kann. Ein verringerter Energieverbrauch reduziert auch die Kosten eines fest installierten Mobilfunk-Moduls, was dessen Betriebskosten senkt.

Vorzugsweise hat die dem Mobilfunk-Endgerät zugewiesene Periodendauer einen ersten (höheren) Periodendauer-Wert, wenn der dem Mobilfunk-Endgerät zugeordnete Geräteparameter-Werte anzeigt, dass das Mobilfunk-Endgerät dauerhaft ortsfest ist. Dem gegenüber ist es vorteilhaft, Mobilfunk-Endgeräten, die nicht dauerhaft ortsfest sind, einen vergleichsweise kleineren zweiten Periodendauer-Wert zuzuordnen. Typischerweise ist der kürzere Periodendauer-Wert die für eine jeweilige Mobilfunk-Zelle vorgesehene Standardeinstellung. Es ist jedoch nicht notwendig, die möglichen Periodendauer-Werte für das Prüfen auf den Empfang von Signalen von der Basisstation her auf genau zwei Werte zu beschränken. Es können auch mehr als zwei Werte zur Auswahl zur Verfügung stehen, wobei die Auswahl beispielsweise von der zugeordneten Basisstation getroffen und dem Mobilfunk-Endgerät signalisiert wird.

So ist eine Zuordnung einzelner Mobilfunk-Endgeräte zu Gruppen mit unterschiedlichen Periodendauern vorteilhaft. Hierbei sind die unterschiedlichen Periodendauern vorzugsweise ein Vielfaches einer Grundperiode. In einer vorteilhaften vereinfachten Ausprägung dauert eine verlängerte Periodendauer für dauerhaft ortsfeste Geräte doppelt so lang wie die Grundperiode. Dadurch wird der Signalisierungsaufwand, soweit überhaupt nötig, minimiert.

In einer Variante sind mehrere Gruppen mit der gleichen zugewiesenen Periodendauer vorgesehen. Diese weisen bei gleicher Periodendauer jedoch unterschiedliche relative Startzeitpunkte ihrer jeweiligen Perioden auf. Der zeitliche Abstand der Starzeitpunkte liegt in einem Beispiel bei der Dauer einer Grundperiode.

Die Periodendauer ist in einem anderen Ausführungsbeispiel zusätzlich von mindestens einem aktuellen Wert eines Zustandsparameters abhängig, der einen aktuellen Zustand des Mobilfunk-Endgeräts anzeigt.

Hierbei kann es sich beispielsweise um einen aktuellen Batteriestatus des Mobilfunk-Endgeräts handeln. Je nach Geräteparameter-Wert kann unter Berücksichtigung des Zustandsparameters eine Veränderung der zugewiesenen Periodendauer zu höheren oder niedrigeren Werten hin vorgenommen werden. Auf diese Weise kann die Periodendauer je nach Kombination des Geräteparameter-Werts und des aktuellen Zustandsparameter-Werts mehr als zwei Periodendauer-Werte annehmen.

Die Periodendauer wird in einem anderen Beispiel einer solchen Ausführungsform in einem definierten Rahmen dynamisch variiert. Bei dieser Variante kann die Periodendauer also auch während der Zuordnung zu einer bestimmten Basisstation ohne Neuanmeldung oder einen vergleichbar aufwändigen Signalisierungsprozess variierten. So kann beispielsweise ermöglicht werden, dass ein sich in einem Fahrzeug befindliches Mobilfunk-Endgerät, etwa in Form eines eingebauten Moduls, bei Fahrzeug-Aus mit einer anderen Periodendauer betrieben wird als bei Fahrzeug-An.

Bei solchen Ausführungsformen mit Nutzung des Zustandsparameters kann zusätzlich zwischen der Geräteklassifizierung und dem mindestens einen Zustandsparameter eine Priorisierung vorgenommen werden, der Art, dass derjenige Parameter, dessen ermitteltem aktuellen Wert eine längere Periodendauer zugeordnet ist, bei der Zuordnung der Periodendauer gegenüber anderen Parametern stärker gewichtet wird.

Für die Ermittlung der Geräte-individuellen Periodendauer sind unterschiedliche Ausführungsformen denkbar. Gemäß dem erfindungsgemäßen Betriebsverfahren übermittelt das Mobilfunk-Endgerät während oder nach einer Anmeldung bei der externen Basisstation den Geräteparameter-Wert. Zusätzlich übermittelt es, optional im Sinne eines Ausführungsbeispiels, gegebenenfalls ,weitere aktuelle Zustandsparameter-Werte. Die Periodendauer kann in einer ersten Variante von der externen Basisstation dem Mobilfunk-Endgerät zugewiesen sein. Alternativ ermittelt in einer zweiten Variante das Mobilfunk-Endgerät den Periodendauer-Wert intern. Je nach Einrichtung des Netzwerks kann die intern ermittelte Periodendauer dann an die Basisstation kommuniziert werden, oder die Basisstation ermittelt auf der Grundlage der ihr übermittelten Parameter-Werte die Periodendauer ebenfalls selbst.

Bei Ausführungsbeispielen eines zweiten Anwendungszusammenhangs umfasst das Betriebsverfahren zusätzlich ein regelmäßig wiederholtes Übermitteln eines jeweils aktuellen Kanalqualitäts-Indikators vom Mobilfunk-Endgerät an eine externe Basisstation, wobei der Kanalqualitäts-Indikator ein Maß für einen Signal-zu-Rauschabstand oder für einen Signal-zu-Rausch-plus-Interferenz-Abstand eines Kanals ist, auf dem das Mobilfunk-Endgerät an das Mobilfunk-Endgerät gerichtete Funksignale von der externen Basisstation her empfängt. Die Übermittlungen werden mit einem dem Mobilfunk-Endgerät individuell zugeordneten Zeitabstand zu einander durchgeführt, der von dem Geräteparameter-Wert abhängt, welcher anzeigt, ob das Mobilfunk-Endgerät dauerhaft ortsfest oder nicht dauerhaft ortsfest ist.

Der zweite Anwendungszusammenhang betrifft eine Verbesserung an sich bekannter Verfahren zur Downlink-Datenübertragung, also in Richtung von einer Basisstation zu einem Mobilfunk-Endgerät. Hierbei übersendet das Mobilfunk-Endgerät in definierten Zeitintervallen einen Kanalqualität-Indikator an die Basisstation. Die Basisstation entscheidet anhand dieser Information und anhand der Anzahl aktuell mit der Basisstation verbundener Mobilfunk-Endgeräte, welchem Mobilfunk-Endgerät welche Kanäle zur Datenübertragung im Downlink zugewiesen werden.

Die Datenübertragung erfolgt in vorgegebenen Intervallen, die als TTI (Transmission Time Intervall) bezeichnet werden. Der Datendurchsatz steigt jedoch nicht proportional zur Anzahl der verwendeten Kanäle, weil die Interferenz der Kanäle untereinander zunimmt, je mehr Kanäle hinzugenommen werden. Daher kann sich die Kanalqualität verschlechtern.

Mit dem Kanalqualitäts-Indikator kann die Basisstation, die im Zusammenhang des UMTS-Standards als NodeB bezeichnet wird, die Datenübertragung über HSDPA an eine große Vielzahl Mobilfunk-Endgeräte steuern. Hierbei werden die Zeitintervalle TTI für ein bestimmtes Mobilfunk-Endgerät anhand der von diesem Mobilfunk-Endgerät gesendeten Werte des Kanalqualitäts-Indikators vorgegeben.

Auch dauerhaft ortsfeste Mobilfunk-Endgeräte wie beispielsweise Mobilfunkmodule in stationären Verkaufsautomaten folgen beim Stand der Technik dieser Prozedur. Jedoch ändern sich die übermittelten Werte des Kanalqualität-Indikators für stationäre Geräte nicht mit einer derartigen Geschwindigkeit, die kurze Zeitabstände zwischen den Übersendungen des Kanalqualitäts-Indikators erforderlich macht. Kurze Zeitspannen zwischen solchen Übersendungen verursachen beim Mobilfunk-Endgerät einen unnötig hohen Energiebedarf, weil das Mobilfunk-Endgerät jeweils aus einem Ruhezustand in den Betriebszustand versetzt werden muss, um den Kanalqualitäts-Indikator übersenden zu können. Weiterhin ergibt sich ein unnötiger Anstieg der Interferenz, da auf Grund der sich nur wenig ändernden mittleren Kanalqualität der neue Informationsgehalt der zeitlich dicht aufeinanderfolgenden Kanal-Qualitätsindikators gering ist.

Dagegen wird durch die Ausführungsbeispiele des vorliegenden zweiten Anwendungszusammenhangs erreicht, dass der Zeitabstand zwischen aufeinander folgenden Übersendungen eines Kanalqualitäts-Indikators in Abhängigkeit davon einstellbar ist, ob das Mobilfunk-Endgerät dauerhaft ortsfest oder nicht dauerhaft ortsfest ist. Dies verringert die Uplink Signalisierung und damit die UI Interferenz, sowie den individuellen Stromverbrauch des Mobilfunk-Endgeräts.

Dies ermöglicht weiterhin auf der Seite des Netzwerks, einen hohen Wert für den Zeitabstand zwischen aufeinander folgenden Übermittlungen des Kanalqualitäts-Indikators vorzugeben. Beispielsweise kann dauerhaft der maximal mögliche Wert vorgegeben werden.

Alternativ kann vorgesehen sein, dass das Mobilfunk-Endgerät einen Zeitabstand zwischen aufeinander folgenden Übermittlungen intern ermittelt und diesen verwendet. Dies vermeidet die sonst nötige Steuersignalisierung zwischen dem Mobilfunk-Endgerät und der Basisstation und hilft so, den Energiebedarf des Betriebsverfahrens weiter zu reduzieren.

In einer besonders vorteilhaften Ausprägung ist der Zeitabstand zwischen aufeinander folgenden Übersendungen des Kanalqualitäts-Indikators von der Basisstation vorgegeben. Er kann in alternativen Ausführungsformen fest oder variabel sein. Ist er variabel, so ist der Zeitabstand vorzugsweise in Abhängigkeit von einem weiteren Parameter veränderlich, beispielsweise von einem Geräte-Merkmal des Mobilfunk-Endgeräts, wie beispielsweise von einem Konfigurationsparameter. In einer weiteren Alternative ist vorgesehen, dass das Mobilfunk-Endgerät den Kanalqualitäts-Indikator nur in einem solchen Fall an die Basisstation übersendet, in dem sich die Kanalqualität über ein vorgegebenes Maß hinaus verändert. Auf diese Weise wird sichergestellt, dass nur bei Verlassen dieses vorgegebenen Toleranzbereiches um einen vorgegeben Wert des Kanalqualitäts-Indikators eine Übertragung des Kanalqualitäts-Indikators erfolgt, daher eine nur geringe Anzahl an Übertragungen des Indikators erforderlich ist.

Bei Ausführungsbeispielen eines dritten Anwendungszusammenhangs umfasst das erfindungsgemäße Betriebsverfahren zusätzlich folgende Schritte:
- Ermitteln des Geräteparameter-Werts, der anzeigt, ob das Mobilfunk-Endgerät dauerhaft ortsfest oder nicht dauerhaft ortsfest ist;
- Wechseln von einem aktiven Zustand in einen inaktiven Zustand;
- ausschließlich in demjenigen Fall, in dem der Geräteparameter-Wert anzeigt, dass das Mobilfunk-Endgerät nicht dauerhaft ortsfest ist, und in dem das Mobiffunk-Endgerät in dem inaktiven Zustand ist: Periodisches Durchführen eines Zell-Auswahl oder Zell-Neuauswahl-Prozesses des Mobilfunk-Endgeräts, wobei eine aus einer Vielzahl empfangbarer Basisstationen zur Kommunikation mit dem Mobilfunk-Endgerät nach Übergang in einen aktiven Zustand des Mobilfunk-Endgeräts ausgewählt wird;
- ausschließlich in demjenigen Fall, in dem der Geräteparameter-Wert anzeigt, dass das Mobilfunk-Endgerät dauerhaft ortsfest ist, und in dem das Mobilfunk-Endgerät in dem inaktiven Zustand ist: Unterlassen der Durchführung des Zell-Auswahl oder Zell-Neuauswahl-Prozesses im inaktiven Zustand des Mobilfunk-Endgeräts.

Die Ausführungsbeispiele des vorliegenden Anwendungszusammenhangs betreffen Verfahren, in dem Mobilfunk-Endgeräte einen inaktiven Zustand (wie den bekannten IDLE-Zustand) periodisch zur Durchführung eines Zell-Auswahl- oder Zell-Neuauswahl-Verfahrens unterbrechen. Diese Ausführungsbeispiele des erfindungsgemäßen Betriebsverfahrens ermöglichen eine Differenzierung zwischen dauerhaft ortsfesten und nicht dauerhaft ortsfesten Mobilfunk-Endgeräten. Nur letztere führen den Zell-Auswahl- oder Zell-Neuauswahl-Prozess periodisch durch. Dauerhaft ortsfeste Mobilfunk-Endgeräte unterlassen dagegen die Durchführung dieses Prozesses und unterbrechen den inaktiven Zustand dafür nicht. Dies ermöglicht eine Verringerung des Energiebedarfs bei der Durchführung des Betriebsverfahrens, die insbesondere in Kombination mit den Betriebsverfahren nach den vorher beschrieben Anwendungszusammenhängen zu einem besonders energiesparenden Betrieb führt.

In einer Ausführungsform wird der Zell-Auswahl- oder Zell-Neuauswahl-Prozess so lange unterbunden, wie die aktuelle Zelle, auf der sich das Mobilfunk-Endgerät im inaktiven Zustand befindet, eine hinreichend gute Übertragungsqualität liefert, um die Aufnahme einer Kommunikation zwischen Basisstation und Mobilfunk-Endgerät zu gewährleisten.

Bei einem Ausführungsbeispiel, das in allen drei beschriebenen Anwendungszusammenhängen Vorteile entfaltet, wird während oder einer nach einer Anmeldung des Mobilfunk-Endgeräts bei der externen Basisstation der Geräteparameter-Wert an die externe Basisstation übermittelt. Je nach Ausführungsbeispiel können dabei gegebenenfalls weitere aktuelle Zustandsparameter-Werte übertragen werden. Dies ermöglicht der Basisstation eine Ermittlung und Zuweisung von dem Geräteparameter-Wert und ggf. dem zusätzlichen Zustandsparameter-Wert entsprechenden Vorgaben für Betriebsparameter an das Mobilfunk-Endgerät.

Gemäß einem zweiten Aspekt der Erfindung wird ein Mobilfunk-Endgerät bereitgestellt, mit;
- einer Endgerät-Steuereinheit, die ausgebildet ist, eine Ausführung mindestens eines Betriebsschritts beim Betrieb des Mobilfunk-Endgeräts zu steuern, und mit
- einer Empfangseinheit, bei dem
- die Endgerät-Steuereinheit ausgebildet ist, die Empfangseinheit von einem inaktiven Betriebszustand des Mobilfunk-Endgeräts periodisch mit einer vorbestimmten Periodendauer in einen aktiven Betriebszustand zu schalten, d.h., zu aktivieren;
- die Empfangseinheit ausgebildet ist, im aktiven Betriebszustand zu prüfen, ob an das Mobilfunk-Endgerät gerichtete Signale von einer externen Basisstation her empfangen werden.

Die Endgerät-Steuereinheit des Mobilfunk-Endgeräts ist ausgebildet,
- während oder nach einer Anmeldung des Mobilfunk-Endgeräts bei der externen Basisstation einen dem Mobilfunk-Endgerät zugeordneten Geräteparameter an die externe Basisstation zu übermitteln (702), der genau einen von zwei möglichen Geräteparameter-Werten hat, die anzeigen, ob das Mobilfunk-Endgerät dauerhaft ortsfest oder nicht dauerhaft ortsfest ist,
- im inaktiven Betriebszustand das Aktivieren der Empfangseinheit mit einer dem Mobilfunk-Endgerät individuell zugeordneten Periodendauer durchzuführen, die von dem Geräteparameter-Wert abhängt, der anzeigt, ob das Mobilfunk-Endgerät dauerhaft ortsfest oder nicht dauerhaft ortsfest ist.

Das Mobilfunk-Endgerät des zweiten Aspekts der Erfindung teilt die Vorteile des oben beschriebenen Betriebsverfahrens für ein Mobilfunk-Endgerät. Das Mobilfunk-Endgerät kann als Endnutzer-Gerät wie beispielsweise ein Mobiltelefon, eine Mobilfunk-Karte zum Gebrauch mit einem handelsüblichen Computer oder Laptop o. ä. ausgebildet sein. Alternativ ist das Mobilfunk-Endgerät ein Modul zum Einbau in Maschinen wie beispielsweise Verkaufsautomaten, Messstationen o. ä.

Nachfolgend werden Ausführungsbeispiele des Mobilfunk-Endgeräts des zweiten Aspekts der Erfindung beschrieben. Auch die Ausführungsbeispiele des Mobilfunk-Endgeräts können miteinander zur Bildung weiterer Ausführungsformen kombiniert werden, soweit dies nicht ausdrücklich ausgeschlossen wird.

Als Mobilfunk-Endgerät wird im weitesten Sinne jedes für die Funkdatenübertragung geeignete, nutzerseitige Endgerät verstanden. Hierbei kann es sich in unterschiedlichen Ausführungsbeispielen um ein Mobilfunk-Modul handeln, das als Teil eines dauerhaft ortsfesten oder nicht dauerhaft ortsfesten Geräts eine Mobilfunk-basierte Daten- oder Sprachkommunikation mit externen Netzgeräten wie einer Basisstation oder einem anderen Mobilfunk-Endgerät steuert. Sowohl das Mobilfunk-Modul als auch das erwähnte Gerät bilden Mobilfunk-Endgeräte im Sinne der vorliegenden Erfindung. Beispiele für nicht ortsfeste Geräte, die ein Mobilfunkmodul enthalten, sind Mobiltelefone, baulich in Maschinen oder Fahrzeuge integrierte Mobiltelefone, tragbare Computer wie PDAs oder Laptops, oder mobile Verkaufsgeräte wie etwa Geräte für Zugpersonal zum Abrufen, bargeldlosen Bezahlen und Ausdrucken von Zugfahrkarten.

Die Vorteile dieses Mobilfunk-Endgeräts entsprechen denen des oben beschriebenen Betriebsverfahrens im ersten Anwendungszusammenhang.

In Ausführungsbeispielen ist das Mobilfunk-Endgerät ausgebildet, ein Betriebsverfahren gemäß einem oder mehreren Ausführungsbeispiele des ersten Aspekts der Erfindung durchzuführen. Dabei können die zusätzlichen Merkmale von Ausführungsbeispielen unterschiedlicher Anwendungszusammenhänge allein oder in Kombination miteinander implementiert sein.

Bei einem weiteren Ausführungsbeispiel ist die Steuereinheit ausgebildet die Aktivierung der Empfangseinheit im inaktiven Zustand mit einem ersten Periodendauer-Wert vorzunehmen, wenn der dem Mobilfunk-Endgerät zugeordnete Geräteparameter-Wert anzeigt, dass das Mobilfunk-Endgerät dauerhaft ortsfest ist, und die Aktivierung andernfalls mit einem Periodendauer-Wert vorzunehmen, der im Vergleich mit dem ersten Periodendauer-Wert kleiner ist.

Bei einem anderen Ausführungsbeispiel ist die Steuereinheit ausgebildet, die Aktivierung der Empfangseinheit mit einem Periodendauer-Wert vorzunehmen, der zusätzlich von mindestens einem aktuellen Wert eines Zustandsparameters des Mobilfunk-Endgeräts abhängt, welcher einen aktuellen Zustand des Mobilfunk-Endgeräts anzeigt.

Ein weiteres Ausführungsbeispiel des Mobilfunk-Endgeräts hat zusätzlich eine Sendeeinheit, die mit der Steuereinheit verbunden ist. Die Steuereinheit ist zusätzlich ausgebildet während oder nach der Anmeldung des Mobilfunkgeräts bei einer externen Basisstation die Sendeeinheit zur Übermittlung des Geräteparameter-Werts und gegebenenfalls des weiteren aktuellen Zustandsparameters an die externe Basisstation zu veranlassen.

In alternativen Ausführungsbeispielen ist die Steuereinheit entweder ausgebildet, die dem Mobilfunk-Endgerät zugewiesene Periodendauer aus von der externen Basisstation her empfangenen Steuersignalen zu ermitteln oder, die dem Mobilfunk-Endgerät zugewiesene Periodendauer intern zu ermitteln.

Ein Mobilfunk-Endgerät des zweiten Anwendungszusammenhangs hat eine Empfangseinheit und eine Sendeeinheit. Die Endgerät-Steuereinheit ist hier ausgebildet,
- regelmäßig wiederholt einen unter Verwendung der Empfangseinheit ermittelten, jeweils aktuellen Kanalqualität-Indikator an eine externe Basisstation zu übermitteln, wobei der Kanalqualität-Indikator ein Maß für einen Signal-zu-Rauschabstand oder für einen Signal-zu-Rausch-plus-Interferenz-Abstand eines Kanals ist, auf dem das Mobilfunk-Endgerät an das Mobilfunk-Endgerät gerichtete Funksignale von der externen Basisstation her empfängt, und
- die Übermittlungen mit einem dem Mobilfunk-Endgerät individuell zugeordneten Zeitabstand zu einander durchzuführen, der von dem Geräteparameter-Wert abhängt, welcher anzeigt, ob das Mobilfunk-Endgerät dauerhaft ortsfest oder nicht dauerhaft ortsfest ist.

Bei einem Ausführungsbeispiel des oben erläuterten dritten Anwendungszusammenhangs ist die Endgerät-Steuereinheit ausgebildet,
- den Geräteparameter-Wert, der anzeigt, ob das Mobilfunk-Endgerät dauerhaft ortsfest oder nicht dauerhaft ortsfest ist zu ermitteln;
- das Mobilfunkendgerät von einem aktiven Betriebszustand in einen inaktiven Betriebszustand zu schalten;
- ausschließlich in demjenigen Fall, in dem der Geräteparameter-Wert anzeigt, dass das Mobilfunk-Endgerät nicht dauerhaft ortsfest ist, und in dem das Mobilfunk-Endgerät in dem inaktiven Zustand ist: einen Zell-Auswahl oder Zell-Neuauswahl-Prozesses des Mobilfunk-Endgeräts periodisch durchzuführen, wobei eine aus einer Vielzahl empfangbarer Basisstationen zur Kommunikation mit dem Mobilfunk-Endgerät nach Übergang in einen aktiven Zustand des Mobilfunk-Endgeräts ausgewählt wird;
- ausschließlich in demjenigen Fall, in dem der Geräteparameter-Wert anzeigt, dass das Mobilfunk-Endgerät dauerhaft ortsfest ist, und in dem das Mobilfunk-Endgerät in dem inaktiven Zustand ist: die Durchführung des Zell-Auswahl oder Zell-Neuauswahl-Prozesses im inaktiven Zustand des Mobilfunk-Endgeräts zu unterlassen.

Gemäß einem dritten Aspekt der vorliegenden Erfindung wird ein Betriebsverfahren für eine Basisstation angegeben. Das Betriebsverfahren umfasst
- Zuweisen einer Periodendauer an ein externes Mobilfunk-Endgerät für ein periodisches Prüfen auf Seiten des Mobilfunk-Endgeräts in dafür vorgesehenen Unterbrechungen eines inaktiven Zustands des Mobilfunk-Endgeräts, ob an das Mobilfunk-Endgerät gerichtete Signale von der Basisstation her empfangen werden,
- Empfangen eines dem externen Mobilfunk-Endgerät zugeordneten Geräteparameters während oder nach einer Anmeldung des Mobilfunk-Endgeräts bei der Basisstation (702) von dem externen Mobilfunk-Endgerät her, wobei der Geräteparameter genau einen von zwei möglichen Geräteparameter-Werten hat, die anzeigen, ob das Mobilfunk-Endgerät dauerhaft ortsfest oder nicht dauerhaft ortsfest ist; und
- Zuweisen Periodendauer an das externe Mobilfunk-Endgerät in Abhängigkeit von dem dem Mobilfunk-Endgerät zugeordneten Geräteparameter-Wert, der anzeigt, ob das Mobilfunk-Endgerät dauerhaft ortsfest oder nicht dauerhaft ortsfest ist.

Die Vorteile des Betriebsverfahrens für eine Basisstation entsprechen den Vorteilen des Betriebsverfahrens für ein Mobilfunk-Endgerät.

Die notwendigen Anweisungen für die Durchführung bzw. Parametrisierung des vorteilhaften Betriebsverfahrens bzw. deren Anwendung zum Betrieb der Basisstation bzw. des Endgerätes können durch die Mobilfunk-Infrastruktur bzw. deren Betriebsverfahren angestoßen bzw. realisiert werden. Eine vorteilhafte Ausprägung könnte in der Unterscheidung, ob das Mobilfunk-Endgerät dauerhaft ortsfest oder nicht dauerhaft ortsfest ist, in der Mobilfunk-Infrastruktur bzw. deren Betriebsverfahren liegen.

Im zweiten Anwendungszusammenhang umfasst ein Ausführungsbeispiel des Betriebsverfahrens für eine Basisstation die Schritte
- Regelmäßig wiederholtes Empfangen eines vom Mobilfunk-Endgerät her übermittelten, jeweils aktuellen Kanalqualität-Indikators, wobei der Kanalqualität-Indikator ein Maß für einen Signal-zu-Rauschabstand oder für einen Signal-zu-Rausch-plus-Interferenz-Abstand eines Kanals ist, auf dem das Mobilfunk-Endgerät an das Mobilfunk-Endgerät gerichtete Funksignale von der Basisstation her empfängt, und
- Individuelles Zuweisen eines Zeitabstands zwischen den Übermittlungen an das Mobilfunk-Endgerät, der von dem Geräteparameter-Wert abhängt, welcher anzeigt, ob das Mobilfunk-Endgerät dauerhaft ortsfest oder nicht dauerhaft ortsfest ist.

Gemäß einem vierten Aspekt der Erfindung wird eine Basisstation angegeben. Eine erfindungsgemäße Basisstation ist ausgebildet, das Betriebsverfahren des dritten Aspekts der Erfindung oder eines seiner Ausführungsbeispiele durchzuführen.

Die Vorteile der erfindungsgemäßen Basisstation entsprechen denen der oben beschriebenen anderen Aspekte der Erfindung.

In verschiedenen Ausführungsbeispielen umfasst die Basisstation
- eine Sendeeinheit
- eine Basisstation-Steuereinheit, die mit der Sendeeinheit verbunden und ausgebildet ist, mindestens einen Verfahrensparameter-Wert an ein mit der Basisstation in Kommunikationsverbindung stehendes Mobilfunk-Endgerät zu senden, wobei
- der Verfahrensparameter-Wert eine Ausführung mindestens eines Betriebsverfahrensschritts des Mobilfunk-Endgeräts beeinflusst, wobei
- der Verfahrensparameter-Wert eine Periodendauer für ein periodisches Prüfen auf Seiten des Mobilfunk-Endgeräts in dafür vorgesehenen Unterbrechungen eines inaktiven Zustands des Mobilfunk-Endgeräts ist, ob an das Mobilfunk-Endgerät gerichtete Signale empfangen werden, und wobei
- die Periodendauer von einem vom Mobilfunk-Endgerät her während oder nach einer Anmeldung des Mobilfunk-Endgeräts bei der Basisstation empfangenen und dem Mobilfunk-Endgerät zugeordneten Geräteparameter abhängig ist, der genau einen von zwei möglichen Geräteparameter-Werten hat, die anzeigen, ob das Mobilfunk-Endgerät dauerhaft ortsfest oder nicht dauerhaft ortsfest ist.

Die Basisstation kann den Geräteparameter-Wert vom Mobiffunk-Endgerät her empfangen und anhand des empfangenen Wertes den zugehörigen Periodendauer-Wert ermitteln und dem Mobilfunk-Endgerät zuweisen. Es ist in alternativen Ausführungsformen auch denkbar, dass die Basisstation auf eine interne oder externe Datenbank zugreift, die den Geräteparameter-Wert eines Mobilfunk-Endgeräts speichert. Der Geräteparameter-Wert eines Mobilfunk-Geräts könnte beispielsweise in einer Datenbank, z.B. einem home location register (HLR) der Mobilfunk-Infrastruktur gespeichert sein.

In einem anderen Ausführungsbeispiel ermittelt und weist die Basisstation die Periodendauer in zusätzlicher Abhängigkeit von mindestens einem aktuellen Wert eines Zustandsparameters zu, der einen aktuellen Zustand des Mobilfunk-Endgeräts anzeigt.

In einem weiteren Ausführungsbeispiel ist vorgesehen, Mobilfunk-Endgeräte, die den Geräteparameter "statisch" aufweisen, durch eine in einer bestimmten Zeitspanne mehrfach wiederholte Paging-Signalisierung anzusprechen. Auf diese Weise kann verhindert werden, dass ein solches Mobilfunk-Endgerät ein Paging-Signal verpasst, das in einer gegenüber dem bisherigen Standard verlängerten Inaktivitätsphase des Mobilfunk-Endgeräts gesendet wird.

Zusätzliche Ausführungsbeispiele der Basisstation ergeben sich aus den zusätzlichen Merkmalen der Ausführungsbeispiele der anderen Aspekte der Erfindung.

Die Erfindung betrifft schließlich ein Computerprogrammprodukt, das ausführbaren Programmcode enthält, der ausgebildet ist, in einem Programmspeicher eines programmierbaren Prozessors eines Mobilfunk-Endgeräts installiert dieses zur Ausführung eines Programms zu veranlassen, das ein Betriebsverfahren gemäß dem ersten Aspekt der Erfindung oder einem der hier beschriebenen Ausführungsbeispiele durchführt.

Ein weiteres erfindungsgemäßes Computerprogrammprodukt enthält ausführbaren Programmcode, der ausgebildet ist, in einem Programmspeicher eines programmierbaren Prozessors einer Basisstation eines zellulären Funknetzwerks installiert, diese zur Ausführung eines Programms zu veranlassen, das ein Betriebsverfahren nach dem dritten Aspekt der Erfindung oder einem der hierin beschriebenen Ausführungsbeispiele durchführt.

Ein weiterer Aspekt der Erfindung ist ein Betriebsverfahren für einen Core-Netzwerkknoten eines Mobilfunk-Netzwerkes, Der Core-Netzwerkknoten steuert den Betrieb einer Basisstation. Das Steuern umfasst:
- Zuweisen mindestens eines Verfahrensparameter-Wertes an eine Basisstation zur Übermittlung des Verfahrensparameter-Wertes an ein mit der Basisstation in Kommunikationsverbindung stehendes Mobilfunk-Endgerät, für eine Ausführung mindestens eines Betriebsverfahrensschritts des Mobilfunk-Endgeräts, wobei
- der Verfahrensparameter-Wert eine Periodendauer für ein periodisches Prüfen auf Seiten des Mobilfunk-Endgeräts in dafür vorgesehenen Unterbrechungen eines inaktiven Zustands des Mobilfunk-Endgeräts ist, ob an das Mobilfunk-Endgerät gerichtete Signale empfangen werden, dadurch gekennzeichnet, dass
- die zugewiesene Periodendauer von einem vom Mobilfunk-Endgerät her während oder nach einer Anmeldung des Mobilfunk-Endgeräts bei der von der Basisstation empfangenen und dem Mobilfunk-Endgerät zugeordneten Geräteparameter abhängig ist, der genau einen von zwei möglichen Geräteparameter-Werten hat, die anzeigen, ob das Mobilfunk-Endgerät dauerhaft ortsfest oder nicht dauerhaft ortsfest ist.

Nachfolgend werden weitere Ausführungsbeispiele unter Bezugnahme auf die beiliegenden Zeichnungen erläutert. Es zeigen:
Fig. 1 ein vereinfachtes Flussdiagramm eines ersten Ausführungsbeispiels eines erfindungsgemäßen Verfahrens;
Fig. 2 ein vereinfachtes Flussdiagramm eines Ausführungsbeispiels eines Betriebsverfahrens für ein Mobilfunk-Endgerät, bei dem in periodisch wiederholten Unterbrechungen eines inaktiven Zustands auf das Vorliegen von Signalen von einer externen Basisstation geprüft wird;
Fig. 3 eine Variante des Verfahrens der Fig. 2, bei dem die Periodendauer der Prüfung zusätzlich von einem Zustandsparameter-Wert abhängig gemacht wird;
Fig. 4 und 5 eine schematisch Darstellung der Leistungsaufnahme eines Mobilfunk-Endgeräts als Funktion der Zeit in einem überwiegend inaktiven Zustand über die Periodendauer mehrerer bzw. eines DRX-Zyklus.
Fig. 6 zeigt ein Flussdiagramm eines Ausführungsbeispiels eines Betriebsverfahrens für ein Mobilfunk-Endgerät, bei dem ein Kanalqualität-Indikator vom Mobilfunk-Endgerät an eine zugeordnete externe Basisstation versendet wird.
Fig. 7 zeigt ein Flussdiagramm eines Ausführungsbeispiels eines Betriebsverfahrens für ein Mobilfunk-Endgerät, bei dem die Durchführung eines Zell-Auswahl oder Zell-Neuauswahl-Prozesses durch das Mobilfunk-Endgerät davon abhängig gemacht, wird ob das Mobiffunk-Endgerät dauerhaft ortsfest oder nicht dauerhaft ortsfest ist.

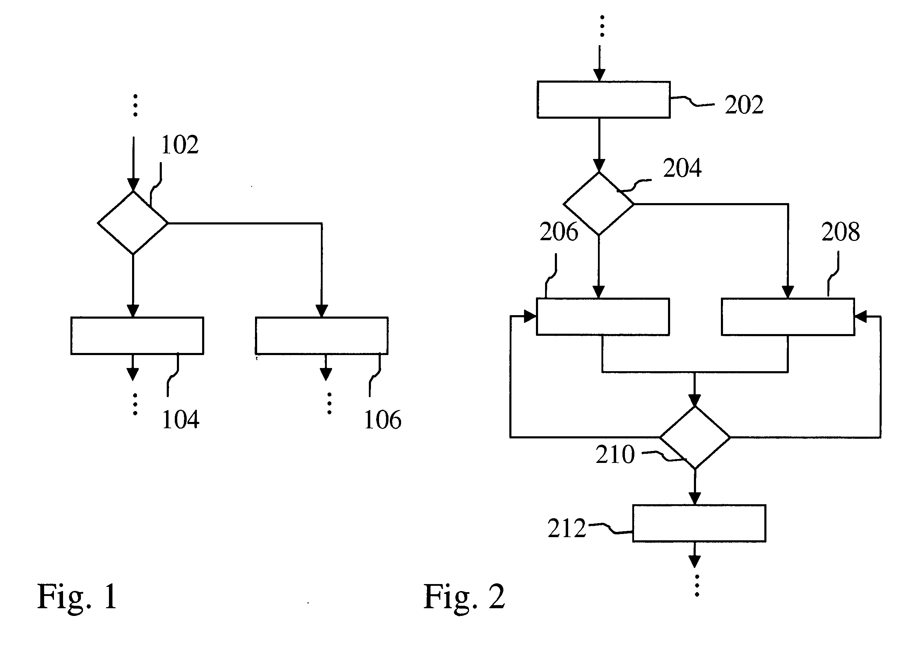

Fig. 1 zeigt ein vereinfachtes Flussdiagramm eines ersten Ausführungsbeispiels eines erfindungsgemäßen Verfahrens. Das Flussdiagramm der Fig. 1 ist stark vereinfacht dargestellt und zeigt verschiedenen Ausführungsbeispielen eines Betriebsverfahrens für ein Mobilfunk-Endgerät gemeinsame Verfahrenselemente. Die Verfahrensführung vor und nach diesem Verfahrenselement ist nicht näher dargestellt und durch vertikal gereihte Punkte repräsentiert. Bei dem Ausführungsbeispiel der Fig. 1 wird in einem Schritt 102 ermittelt, ob das Mobilfunk-Endgerät dauerhaft ortsfest ist oder nicht. Hierzu wird ein entsprechender Geräteparameter geprüft, dessen Wert einem betreffenden Mobilfunkgerät individuell zugeordnet ist. Der Wertebereich des Geräteparameters beschreibt zwei im Stand der Technik bisher nicht näher definierte Geräteklassen, nämlich ,,dauerhaft ortsfest" und "nicht dauerhaft ortsfest". Es handelt sich hierbei um eine Geräteklasse für Mobilfunk-Endgeräte. Die Bedeutung der Parameter-Werte kann im eben erläuterten Sinne auch durch die kürzeren Begriffe "statisch" und "mobil" beschrieben werden. Der Parameter "Geräteklasse" kann in Form eines Geräteklassen-Bits abgespeichert werden, wobei eine Vereinbarung zu treffen ist, welcher der beiden möglichen Bit-Werte "statisch" und welcher "mobil" bedeuten soll.

Die Unterteilung in weitere Klassen wie vorübergehend dauerhaft ortsfest kann als eine weitere Ausprägung der einzelnen Ausführungen angesehen werden, wobei die Handhabbarkeit bzw. Praktikabilität bzw. Rentabilität in jeder Ausprägungsform separat zu betrachten ist. Insbesondere ist diese Ausprägungsform für Applikationen geeignet, die ihren Betriebszustand erkennbar ändern, und die Änderungen nach einer gewissen Zeitspanne als momentan ortsfest anzusehen ist.

Die Information über die Zugehörigkeit zu einer der Geräteklassen Statisch/Mobil kann alternativ auch in einem bereits bekannten und einem Mobilfunk-Endgerät zugewiesenen Geräteparameter durch entsprechende Erweiterung seines Wertebereiches abgelegt werden. Für die weitere Beschreibung wird jedoch der Einfachheit halber weiter der Fall eines eigenen Geräteparameters angenommen.

Nach Ermittlung des Wertes des Geräteparameters im Schritt 102 verzweigt das Verfahren entweder zu Schritt 104 oder zu Schritt 106, je nachdem, welchen der beiden Werte das betreffende Mobilfunk-Endgerät zugewiesen bekommen hat.

Das Betriebsverfahren für ein Mobilfunk-Endgerät der Fig. 1 kann also wie folgt zusammengefasst werden:

| Schritt | Kurzbeschreibung |
|---|---|
| 102 | Geräteklasse statisch/mobil? |
| 104 | Verfahrensführung im Fall "mobil" |
| 106 | Verfahrensführung im Fall "statisch" |

Nachfolgend wird parallel auf die Figuren 2 bis 5 Bezug genommen.

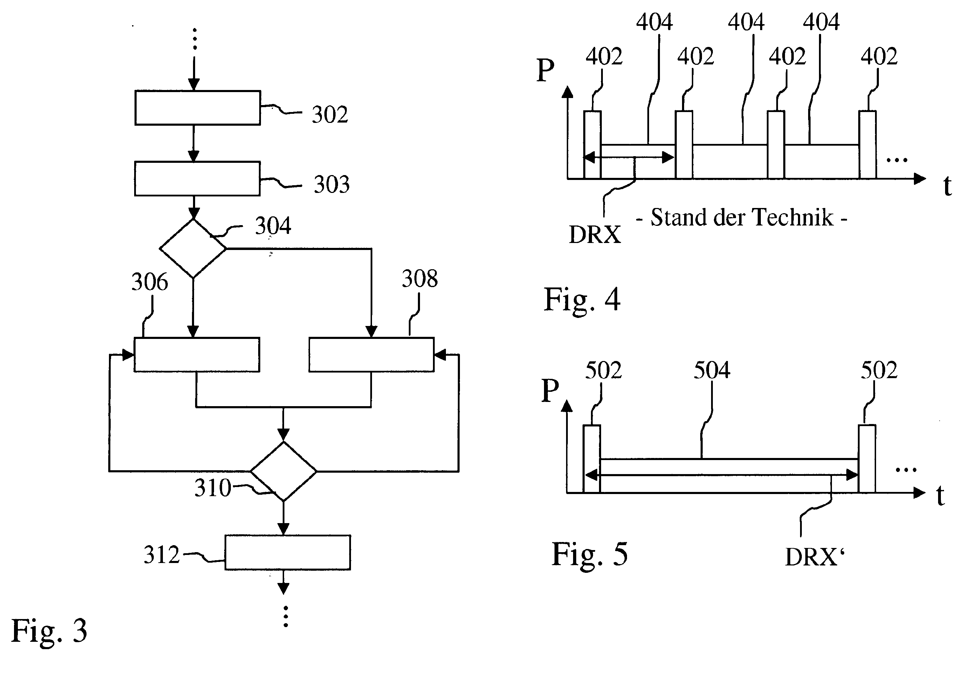

Fig. 2 zeigt als weiteres Ausführungsbeispiel eines Betriebsverfahrens für ein MobilfunkEndgerät im oben erwähnten ersten Anwendungszusammenhang eine vom Geräteparameter abhängige Steuerung einer Periodendauer, mit der in einer Unterbrechung eines inaktiven Zustands des Mobilfunk-Endgeräts geprüft wird, ob an das Mobilfunk-Endgeräte gerichtete Signale von einer externen Basisstation her empfangen werden. Fig. 3 zeigt eine Variante des Verfahrens der Fig. 2. Fig. 4 und 5 zeigen schematisch die Leistungsaufnahme eines Mobilfunk-Endgeräts als Funktion der Zeit in einem überwiegend inaktiven Zustand über die Periodendauer mehrerer (Fig. 4) bzw. eines verlängerten (Fig. 5) DRX-Zyklus.

Im GSM-Standard wird ein inaktiver Zustand als "IDLE" bezeichnet. Die Periodendauer für das Prüfen auf ein Vorliegen eines an ein Mobilfunk-Endgerät gerichteten Paging-Signals wird die DRX-Zyklusdauer bezeichnet. Im Rahmen des GSM-Standards können bekanntlich unterschiedliche Periodendauern für diese Prüfung im Zustand IDLE verwendet werden. Im UMTS-Standard ist die Situation ähnlich der im GSM-Standard. Auch hier können unterschiedliche DRX-Zyklusdauern vorgegeben werden. Jedoch kann in beiden Standards für alle Mobilfunk-Endgeräte einer jeweiligen Zelle zu einem bestimmten Zeitpunkt nur genau ein Wert des DRX-Zyklus gelten.

Der zugewiesene Wert der DRX-Zyklusdauer hängt von vorhersehbaren Szenarien ab, die innerhalb einer Zelle oder innerhalb eines größeren Gebiets, das mehrere Zellen umfasst, voraussichtlich auftreten werden. So wird die DRX-Zyklusdauer nach der technischen Spezifikation 3GPP TS 25.133, Kapitel 4, in Abhängigkeit davon gewählt, ob ein Mobilfunk-Endgerät in einer bestimmten Zelle einen schnellen Zellwechsel, oder einen langsamen Zellwechsel benötigt. Derartige Szenarien ergeben sich auf Grund der Größe der Zelle bzw. der typischerweise schnellen oder langsam Bewegung von Mobilfunk-Endgeräten in dieser Zelle.

Weiterhin wird beispielsweise in einer städtischen Umgebung berücksichtigt, ob Mobilfunk-Endgeräte einen schnellen Zellwechsel durchführen können müssen, wenn beispielsweise ein Nutzer von einer überirdischen Zelle beim Übergang in die U-Bahn in eine unterirdische Zelle wechselt. Darüber hinaus berücksichtigt die genannte technische Spezifikation Obergrenzen für die DRX-Zyklusdauer, um für das Zugriffs-Funknetzwerk und seine Arbeitsleistung optimale Einstellungen zu ermöglichen, sowie einen Synchronisationsverlust des UEs zum Netzwerk zu vermeiden. Um die Mobilität aller Teilnehmer zu garantieren, wird oft der "worst-case"-Fall angenommen. Das bedeutet, dass das Mobilfunk-Endgerät mit der größten Geschwindigkeit, welches sich durch den kleinsten Überlappungsbereich zweier Basisstationen bewegt, als Maßstab für die Wahl der DRX-Zyklusdauer verwendet wird. Als Überlappungsbereich ist in diesem Zusammenhang derjenige Bereich einer Mobilfunkzelle zu verstehen, in dem sich die Zellabdeckung mit der benachbarten Zelle überlappt, in dem also, mit anderen Worten, sowohl die aktuell zugewiesene ("serving") als auch deren Nachbarzelle vom Mobilfunk-Endgerät zum Messen und Vergleichen empfangen werden können.

Eine derartige, zellweite Zuordnung der DRX-Zyklusdauer birgt Nachteile für solche Mobilfunk-Endgeräte der Zelle, die aufgrund Ihrer Funktion dauerhaft ortsfest sind. Dies betrifft beispielsweise Verkaufsautomaten mit einer über Mobilfunk realisierten Netzwerkanbindung. Derartige dauerhaft ortsfeste Geräte müssen nach dem derzeit bekannten Stand der Technik in ihrem inaktiven Zustand mit der gleichen DRX-Zyklusdauer prüfen, ob sie angerufen werden, wie ein schnell bewegtes Mobilfunk-Endgerät. Dabei wird nicht nur geprüft ob eine Nachricht für das Mobilfunk Gerät vorliegt, sondern auch die Haufigkeit der durchzuführenden Nachbarzellmessungen zur Mobilitätsunterstützung hängt vom DRX-Zyklus ab. Dies führt zu dem Nachteil, dass ein dauerhaft ortsfestes MobilfunkEndgerät im Zustand IDLE unnötig oft auf das Vorliegen von an das Mobilfunkt-Endgerät gerichteten Signalen prüft bzw. Nachbarzellmessungen vornimmt und so eine unnötig hohe Leistungsaufnahme besitzt. Dies wird nachfolgend unter Bezugnahme auf die Figuren 4 und 5 erläutert.

Das in Fig. 4 dargestellte Diagramm zeigt anhand eines Doppelpfeils mit dem Bezugszeichen DRX die Periodendauer eines DRX-Zyklus für ein Mobilfunk-Endgerät gemäß dem Stand der Technik. Die in dieser Figur gezeigte Situation entspricht ebenso einem Beispiel der Leistungsaufnahme eines mit dem Geräteparameter "mobil" versehenen Mobilfunk-Endgeräts gemäß der vorliegenden Erfindung. Der Zyklus der Leistungsaufnahme enthält periodisch wiederkehrende Aktivitätsphasen 402, in denen die Prüfung auf ein an das Mobilfunk-Endgerät gerichtetes Paging-Signal vorgenommen wird, und optional (d.h., wenn verlangt) zusätzlich eine oder mehrere Messungen ausgeführt werden. Da das Mobilfunk-Endgerät sich grundsätzlich in einem inaktiven Zustand ("IDLE") befindet, fällt das Mobilfunk-Endgerät nach der Unterbrechung des inaktiven Zustands durch die Aktivitätsphase zurück in den inaktiven Zustand, also in eine weitere Inaktivitätsphase 403, wenn in der Aktivitätsphase kein Paging-Signal detektiert wurde.

Nimmt man - allein zum Zweck einer Beispielrechnung - an, dass während der Inaktivitätsphasen 404 eine Leistungsaufnahme von 2 mW und während der Aktivitätsphasen 402 eine Leistungsaufnahme von 4 mW vorliegt, und dass die Inaktivitätsphase eine Dauer von 0,5 s hat, während die Aktivitätsphase eine Dauer von 0,1 s hat, so ergibt sich ein Energiebedarf von 3 x 4 mW x 0,1 s + 3 x 2 mW x 0,5 s = 4,2 mJ. Die in der Realität erreichte Reduzierung der Leistungsaufnahme ist deutlich größer als in dieser Beispielrechnung.

Fig. 5 zeigt zum Vergleich einen DRX-Zyklus für ein als statisch klassifiziertes MobilfunkEndgerät nach dem erfindungsgemäßen Betriebsverfahren. Während der Zeitspanne, die im Fall der Fig. 4 drei DRX-Zyklusdauern entspricht, wird im vorliegenden Ausführungsbeispiel nach Fig. 5 nur ein einziger DRX-Zyklus durchgeführt. Der Energiebedarf über denselben Zeitraum wie in Fig. 4 beträgt in diesem Fall beträgt 4 mJ, wenn man allein zu Beispielzwecken annimmt, dass die Aktivitätsphase 502 ebenfalls 0,1 s dauert und eine Leistungsaufnahme von 4 mW erfordert, und dass während der Inaktivitätsphase eine Leistungsaufnahme von 2 mW vorliegt.

Bei dem Beispiel der Fig. 5 ergibt sich die im Vergleich mit dem Schema der Fig. 4 verlängerte DRX-Zyklusdauer DRX' durch Auslassen von zwei Aktivitätsphasen 402. Die verlängerte DRX-Zyklusdauer für statische Mobilfunk-Endgeräte kann alternativ ein Vielfaches einer DRX-Zyklusdauer für mobile Mobilfunk-Geräte betragen. Alternativ kann ein auf andere Weise bestimmter, fester oder variabler Wert für die verlängerte DRX-Zyklusdauer verwendet werden.

Der Energiebedarf des Mobilfunk-Endgeräts über die dargestellte Zeitspanne kann also bei dieser nur für Beispielzwecke verwendeten Berechnung um etwa 5 % gesenkt werden. Auf diese Weise kann auch die Betriebsdauer eines mit einer Batterie oder einem Akkumulator betriebenen, dauerhaft ortsfesten Mobilfunk-Endgeräts verlängert werden. Auf der Netzwerkseite kann vorgesehen werden, Mobilfunk-Endgeräte, die den Geräteparameter "statisch" aufweisen, durch eine über eine Zeitspanne mehrfach wiederholte Paging-Signalisierung zu erreichen. Auf diese Weise kann verhindert werden, dass ein solches Mobilfunk-Endgerät ein Paging-Signal der zugeordneten Basisstation verpasst, das in einer längeren Inaktivitätsphase des Mobilfunk-Endgeräts gesendet wird. In dieser Ausprägung wäre keine weitere Signalisierung notwendig.

Fig. 2 zeigt nun ein Flussdiagramm, das die Ermittlung der DRX-Zyklusdauer durch ein Mobilfunk-Endgerät betrifft. Es handelt sich also um ein Beispiel eines Betriebsverfahrens eines Mobilfunk-Endgeräts. Bei diesem Verfahren wechselt das Mobilfunk-Endgerät in einem Schritt 202 von einem aktiven in einen inaktiven Zustand. Anschließend verzweigt das Verfahren, je nachdem, ob das Mobilfunk-Endgerät ein statisches oder ein mobiles Gerät ist. Die Verzweigungsstelle ist im Flussdiagramm der Fig. 2 durch einen Schritt 204 repräsentiert. Falls der Wert des Geräteparameters anzeigt, dass es sich um ein mobiles, also nicht dauerhaft ortsfestes Endgerät handelt, wird zum Schritt 206 verzweigt, in dem die für diese Geräteklasse anwendbare Inaktivitäts-Zeitspanne 404 und damit eine DRX-Zyklusdauer entsprechend dem Beispiel der Fig. 4 verwendet wird. Handelt es sich dagegen um ein Mobilfunk-Endgerät, dessen zugeordneter Geräteparameter anzeigt, dass es sich um ein dauerhaft ortsfestes (statisches) Endgerät handelt, wird im Schritt 208 eine Inaktivitätszeitspanne 504 entsprechend dem Beispiel der Fig. 5 und damit eine längere DRX-Zyklusdauer verwendet, die der Geräteklasse "statisch" zugeordnet ist.

Die in Fig. 2 nicht näher dargestellte Festlegung der Dauer der Inaktivitätsphase kann in beiden Fällen beinhalten, dass das Mobilfunk-Endgerät zuvor einmalig die für den vorliegenden Wert des Geräteparameters gültige Dauer der Inaktivitätsphase oder die DRX-Zyklusdauer durch einen Signalisierungsaustausch mit der zugeordneten Basisstation ermittelt. Alternativ ist der Wert im Mobilfunk-Endgerät selbst gespeichert und abrufbar, etwa auf einem Subscriber-Identity-Modul (SIM) oder in einem anderen nicht-flüchtigen Speicher des Mobilfunk-Endgeräts. Eine Signalisierung mit der Basisstation ist in beiden Alternativen sinnvoll, um der Basisstation ein entsprechend angepasstes Signalisierungsverhalten, insbesondere ein mehrfach Wiederholtes Paging-Signal zu ermöglichen.

In einer einfachen vorteilhaften Ausprägung wird als fester Wert für statische Endgeräte der doppelte DRX Zyklus angenommen, wodurch auch eine signalisierungsfreie Variante erzeugt werden kann, da Pagings wiederholt werden. Zudem ist sichergestellt, dass in jeder zweite Paging-Periode auf Informationen vom Mobilfunk-Endgerät geachtet würde. In einer erweiterten Ausführungsform wird zusätzlich die Zuordnung der Mobilfunk-Endgeräte zu geraden oder ungeraden paging occasions zu einer bestimmten Referenz verwendet, Diese wird aus den im Mobilfunknetzwerk oder in dessen Betriebsverfahren vorhandenen Informationen über das jeweilige statische Mobilfunkendgerät abgeleitet.

Es ist nicht notwendig, dass der gültige Wert des Geräteparameters im inaktiven Zustand abgerufen oder ermittelt wird. Der Schritt 204 kann vorteilhafterweise an anderer, hier nicht nähr dargestellter Stelle des Betriebsverfahrens ausgeführt werden. Beispielsweise kann der Wert des Geräteparameters beim Betriebsstart des Mobilfunk-Endgeräts ermittelt werden. Es kann dann auch gleich die Dauer der Inaktivitätsphase und damit die DRX-Zyklusdauer vor dem Übergang in den inaktiven Zustand mit Schritt 202 eingestellt werden. In diesem Fall braucht im inaktiven Zustand lediglich der dann voreingestellte gültige Wert der DRX-Zyklusdauer abgerufen werden.

In einen Schritt 210 wird im Anschluss an die Inaktivitätsphase 404 oder 504, je nach dem welche Geräteklasse vorliegt, in die kurze Aktivitätsphase 402 beziehungsweise 502 gewechselt, um zu prüfen, ob ein an das Mobilfunk-Endgerät gerichtetes Paging-Singal vorliegt. Ist dies nicht der Fall, wird zurück in die Inaktivitätsphase mit der jeweils gültigen Dauer geschaltet. Dies ist in Fig. 2 durch eine Verzweigung zurück zu den Schritten 206 oder 208 dargestellt. Liegt dagegen ein Paging-Signal vor, wird der inaktive Zustand verlassen, und werden mit Schritt 212 die dem Fachmann bekannten Schritte zum Aufbau einer Mobilfunkkommunikation mit dem anrufenden Endgerät eingeleitet. Ein Übergang vom inaktiven Zustand in den aktiven Zustand erfolgt selbstverständlich auch dann, wenn ein Nutzer des Mobilfunkendgeräts von sich aus eine Kommunikation mit einem anderen Mobilfunkendgerät aufbaut. Dies ist in Figur 2 der Einfachheit halber nicht dargestellt.

Das Betriebsverfahrenden der Figur 2 kann tabellarisch wie folgt zusammengefasst werden.

| Schritt | Kurzbeschreibung |
|---|---|
| 202 | Übergang in einen inaktiven Zustand |
| 204 | Geräteklasse statisch/mobil? |
| 206 | lnaktivitätsphase im Fall "mobil" |
| 208 | Inaktivitätsphase im Fall "statisch" |
| 210 | Liegt Paging-Signal vor? |
| 212 | Wechsel in aktiven Zustand |

Figur 3 zeigt eine Variante des Verfahrens der Figur 2. In Figur 3 werden für diejenigen Verfahrensschritte, die auch im Ausführungsbeispiel der Figur 2 ausgeführt werden, Bezugszeichen mit im Vergleich zur Figur 2 identischen letzten zwei Endziffern verwendet. Beispielsweise entspricht der Schritt 302 des Übergangs in den inaktiven Zustand dem Schritt 202 der Figur 2. Eine nähere Erläuterung aller Verfahrensschritte im einzelnen ist deswegen nicht erforderlich, weil insofern auf Figur 2 verwiesen werden kann. Die nachfolgende Beschreibung konzentriert sich auf die Unterschiede der Verfahrensführung im Beispiel der Figur 3 gegenüber dem der Figur 2.

Im vorliegenden Ausführungsbeispiel wir zusätzlich ein Schritt 303 durchgeführt, der das Ermitteln eines weiteren Zustandsparameters beinhaltet. Der Zustandsparameter kann beispielsweise der aktuelle Ladezustand eines Akkumulators oder einer Batterie sein, die das Mobilfunk-Endgerät mit Energie versorgt. Im Falle eines niedrigen Ladezustandsoder Ladeniveaus ist es nützlich, dass der Betrieb des Mobilfunk-Endgeräts einen möglichst geringen Energiebedarf hat. In diesem Fall kann die DRX-Zyklusdauer daher zusätzlich zur Anpassung in Abhängigkeit dem Geräteparameter mobil/statisch modifiziert werden. So kann beispielsweise für statische Mobilfunk-Endgeräte die DRX-Zyklusdauer noch weiter verlängert werden. Für nicht dauerhaft ortsfeste Mobilfunk-Endgeräte kann zur Reduzierung des Energiebedarfs ebenfalls ein erhöhter Wert der DRX-Zyklusdauer eingestellt werden, der jedoch typischerweise kleiner ist als der für ein dauerhaft ortsfestes Gerät. Der im Schritt 303 ermittelte aktuelle Wert des Zustandsparameters wird in den Verfahrensschritten 306 und 308 bei der Dauer der betreffenden Inaktivitätsphase berücksichtigt.

Eine weitere Information für die Bestimmung des Zustandsparameters kann dabei der momentane Zustand eines mit dem Mobilfunk-Endgerätes verbundenen anderen Gerätes sein. Ein Mobilfunkmodul (als Mobilfunk-Endgerät),verbunden mit einem Fahrzeug (als anderem Gerät), kann beispielsweise im Zustand "Fahrzeug Aus" als momentan ortsfest angesehen werden. Dies ist insbesondere bei langfristig geparkten Fahrzeugen vorteilhaft, bei denen das Mobilfunksystem zum Betrieb in einem Diebstahlschutz-System nicht in den Betriebszustand "Aus" wechseln kann.

In einer Variante des Verfahrens der Figur 3 kann die Berücksichtigung des Zustandsparameters bei der Einstellung DRX-Zyklusdauer zusätzlich von einer Bestätigung durch die zugeordnete Basisstation abhängig gemacht werden. Beispielsweise kann die Basisstation eine zusätzliche Verlängerung der DRX-Zyklusdauer bei niedrigem Ladeniveau der Batterie untersagen, um die Netzwerkfunktionalität nicht zu beeinträchtigen.

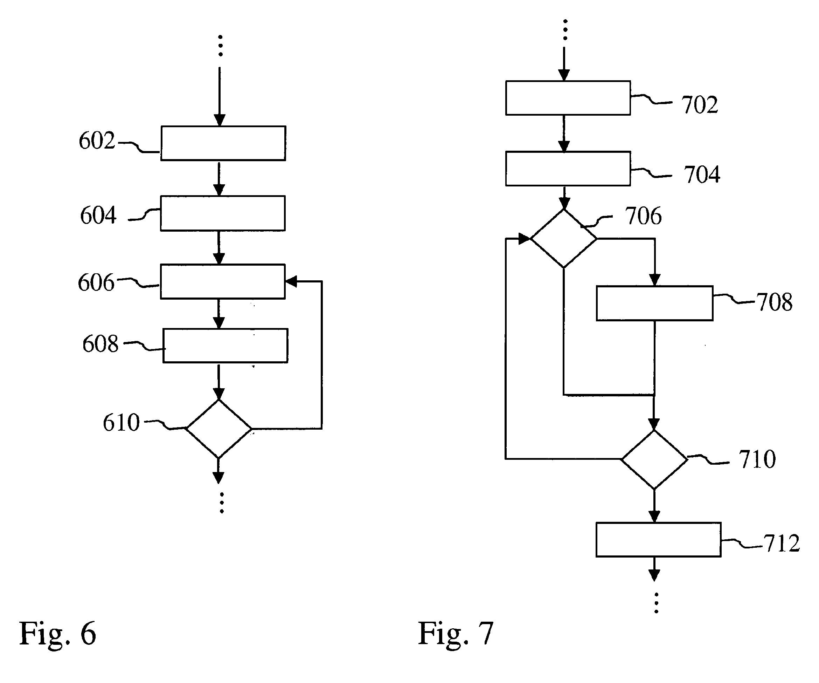

Fig. 6 zeigt ein Flussdiagramm eines Ausführungsbeispiels eines Betriebsverfahrens für ein Mobilfunk-Endgerät im erwähnten zweiten Anwendungszusammenhang, bei dem ein Kanalqualtiät-Indikator vom Mobilfunk-Endgerät an eine zugeordnete externe Basisstation versendet wird.

Der zweite Anwendungszusammenhang betrifft Verfahren zur Downlink-Datenübertragung, also in Richtung von einer Basisstation zu einem Mobilfunk-Endgerät. Hierbei übersendet das Mobilfunk-Endgerät in definierten Zeitinterwallen einen Kanalqualität-Indikator (Channel Quality Indicator, CQI) an die Basisstation. Die Basisstation entscheidet anhand dieser Information und anhand der Anzahl aktuell mit der Basisstation verbundener Mobilfunk-Endgeräte, welchem Mobilfunk-Endgerät welche Kanäle zur Datenübertragung im Downlink zugewiesen werden.

Zusätzlich werden die empfangenen Kanalqualität-Indikatoren bei der Basisstation dazu verwendet, die Ausgangsleistung der Basisstation zu bestimmen. Diese Vorgehensweise betrifft beispielsweise das bekannte, standardisierte Datenübertragungsverfahren HSDPA (High Speed Downlink Packet Access) im Rahmen des Mobilfunkstandards UMTS. Der bei diesem Übertragungsverfahren benötigte Kanal zur Übertragung von Nutzdaten mit hohen Datenraten an das Mobilfunk-Endgerät wird mit HS-DSCH (High Speed Downlink Shared Channel) bezeichnet. Die Datenübertragung erfolgt in vorgegebenen Intervallen, die als TTI (Transmission Time Intervall) bezeichnet werden. Der Datendurchsatz steigt jedoch nicht proportional zur Anzahl der verwendeten Kanäle, weil die Interferenz der Kanäle untereinander zunimmt, je mehr Kanäle hinzugenommen werden. Daher verschlechtert sich die Kanalqualität.

Die Basisstation berücksichtigt darüber hinaus die Mobilität des Mobilfunk-Endgerätes bei ihrer Berechnung des Zeitinterwalls TTI. Bekannt ist, dem Kanalqualität CQI in vorgegeben Zeitintervallen, sogenannten CQI Feedback Cycles, auf einem Steuerungskanal an die Basisstation zusenden. Der Steuerungskanal wird als HS-DPCCH (High Speed Downlink Packet Control Channel) bezeichnet. Diese Zeitintervalle entsprechen Zyklusdauern, die dem Mobilfunkgerät von der Basisstation vorgegeben werden und, wie oben erläutert, von der aktuellen Mobilität eines jeweiligen Mobilfunk-Endgeräts und der aktuellen Nutzungsintensität der Mobilfunkzelle abhängen.

Das Verfahren ist wie die vorherigen Ausführungsbeispiele Teil eines Betriebsverfahrens für ein Mobilfunk-Endgerät. Vorherige Verfahrensschritte und nachfolgende Verfahrensschritte sind der Einfachheit halber nicht dargestellt.

Der hier relevante Teil des Verfahrens beginnt in einem Schritt 602 mit einer Übersendung des Geräteparameter-Wertes, der anzeigt, ob das Mobilfunk-Endgerät dauerhaft ortsfest oder nicht dauerhaft ortsfest ist, vom Mobilfunk-Endgerät an dessen aktuell zugeordnete Basisstation. In einem nachfolgenden Schritt 604 empfängt das MobilfunkEndgerät von der betreffenden Basisstation einen Wert eines Zeitabstandes, mit dem das Mobilfunk-Endgerät bei einer nachfolgenden Datenübertragung einen jeweils aktuellen Kanalqualität-Indikator an die Basisstation senden soll. Das Verfahren wird, wie oben erläutert, beispielsweise im Zusammenhang mit einer Datenübertragung HSDPA von der Basisstation zum Mobilfunk-Endgerät verwendet.

Die Verfahrensschritte 602 und 604 können zu jedem beliebigen Zeitpunkt vor Beginn der Datenübertragung durchgeführt werden. Es ist möglich, jedoch nicht notwendig, sie unmittelbar vor dem Beginn der Datenübertragung durch zuführen. Alternativ können diese Schritte auch bereits bei der Anmeldung des Mobilfunk-Endgeräts an der Basisstation durchgeführt werden.

Mit Beginn einer Datenübertragung wird eine von den nachfolgend beschriebenen Schritten 606 bis 610 gebildete Verfahrensschleife gestartet. Dabei werden zunächst Daten empfangen und parallel dazu ein aktueller Wert des Kanalqualität-Indikators CQI ermittelt. Die Durchführung des Schritts 606 an sich ist dem Fachmann bekannt. Gegenüber herkömmlichen Verfahren variiert das vorliegende Ausführungsbeispiel eines Betriebsverfahrens für ein Mobilfunk-Endgerät jedoch darin, dass der Kanalqualität-Indikator nach der vorgegebenen Zeitspanne übertragen wird, die hier für dauerhaft ortsfeste Mobilfunk-Endgeräte von dem Wert für nicht dauerhaft ortsfeste Mobilfunk-Endgeräte variiert. Die Zeitspanne für dauerhaft ortsfeste Mobilfunk-Endgeräte ist länger als für nicht dauerhaft ortsfeste Mobilfunk-Endgeräte.

Zusammen mit dem Kanalqualität-Indikator CQI wird im Schritt 608 auch ein positives oder negatives Bestätigungssignal ACK oder NACK an die Basisstation übersandt, womit angezeigt wird, ob die zwischenzeitlich empfangenen Daten vollständig und korrekt empfangen wurden. Im Rahmen des oben beschriebenen UMTS-Standards wird der Kanalqualitäts-Indikator (CQI) in einem Übertragungsrahmen (Frame) auf dem HS-DPCCH übertragen. Dieser Rahmen enthält auch das positive (ACK) oder negative Bestätigungssignal (NACK) über den korrekten oder fehlerhaften Empfang von Datenpaketen beim Mobilfunk-Endgerät. Durch Auslassen der Übersendung eines Kanalqualität-Indikators wird beim UMTS-Standard der Übertragungsrahme um zwei Drittel verkürzt. Sollte aktuell kein Datentransfer stattfinden, kann dieser Übertragungsrahmen sogar vollständig entfallen.

In einen nachfolgen Schritt 610 wird geprüft, ob weitere Daten zum Empfang vorliegen. Ist dies der Fall, wird zum Schritt 606 zurück verzweigt. Ist dies nicht der Fall, wird das Betriebsverfahren mit anderen Schritten fortgesetzt, die hier nicht näher erläutert zu werden brauchen. Die Verfahrensführung des vorliegenden Ausführungsbeispiels kann tabellarisch wie folgt zusammen gefasst werden:

| Schritt | Kurzbeschreibung |
|---|---|
| 602 | Übersenden des Geräteparameters "mobil/statisch" |
| 604 | Empfang des Zeitabstands für die CQI-Übersendung von der Basisstation |
| 606 | Empfang von Daten über HSDPA |
| 608 | Übersendung des CQI nach dem vorgegebenen Zeitabstand |
| 610 | Prüfen auf das Vorliegen weiterer Daten |

Fig. 7 zeigt ein Flussdiagramm eines Ausführungsbeispiels eines Betriebsverfahrens für ein Mobilfunk-Endgerät im erwähnten dritten Anwendungszusammenhang, bei dem die Durchführung Zell-Auswahl oder Zell-Neuauswahl Prozesses durch das MobilfunkEndgerät davon abhängig gemacht wird, ob das Mobilfunk-Endgerät dauerhaft ortsfest oder nicht dauerhaft ortsfest ist.

In einem Schritt 702, wird der Geräteparameter "mobil/statisch" im Mobilfunk-Endgerät ermittelt und an eine zugeordnete Basisstation gesendet. Der Schritt 702 kann zu jedem beliebigen Zeitpunkt vor dem nachfolgend beschrieben Schritt 704 ausgeführt werden. Beispielsweise kann die entsprechende Signalisierung mit der Basisstation bei der Anmeldung des Mobilfunk-Endgeräts erfolgen. Zu einem späteren Zeitpunkt geht das Mobilfunk-Endgerät von einem aktiven in einen inaktiven Zustand über (Schritt 704). Dieser Zustand ist beispielsweise der bekannte IDLE-Zustand. Im inaktiven Zustand verzweigt die Verfahrensführung, je nach dem, welcher Wert des Geräteparameters mobil/statisch vorliegt. Handelt es sich bei dem Mobilfunk-Endgerät um ein nicht dauerhaft ortsfestes Gerät, wird in einem Schritt 708 ein Zell-Neuauswahl-Prozess gestartet, wie er an sich im Stand der Technik bekannt ist. Handelt es sich jedoch um ein dauerhaft ortsfestes Mobilfunk-Endgerät, so wird der Schritt 708 nicht durchgeführt. Die Zell-Neuauswahl unterbleibt in diesem Stadium also. In beiden Alternativen wird mit einem Schritt 710 auf einen Anlass geprüft, der einen Übergang zurück in den aktiven Zustand erfordert. Ist dies der Fall, wird die Aktivierung in einem Schritt 712 veranlasst. Ist dies nicht Fall, wird zum Schritt 706 zurück verzweigt. Das bedeutet, dass ein Mobilfunk-Endgerät als nicht dauerhaft ortsfest klassifiziertes Mobilfunk-Endgerät anschließend nach entsprechen Vorgaben erneut den Zell-Neuauswahl-Prozess startet, während ein dauerhaft ortsfestes MobilfunkEndgerät diesen Schritt erneuert auslässt. Bei einem dauerhaft ortsfesten Gerät, wird eine Zell-Neuauswahl nur dann durchgeführt, wenn die derzeit ausgewählte Zelle nicht mehr die vorgegebenen Kriterien bzgl. Suitable Zell erfüllt, sprich, die Möglichkeit zum Starten einer Mobilfunkverbindung nicht mehr bereitstellt.

Das Verfahren kann tabellarisch wie folgt zusammengefasst werden:

| Schritt | Kurzbeschreibung |
|---|---|
| 702 | Ermittlung des Geräteparameters mobil/statisch, Übertragung an Basisstation |
| 704 | Übergang in inaktiven Zustand |
| 706 | Verzweigung, je nach dem ob Geräteparameter statisch oder mobil |
| 708 | Nur im Fall "mobil": Zell-Neuauswahl-Prozess |
| 710 | Prüfung auf Anlass zum Übergang in aktiven Zustand |
| 712 | Übergang in aktiven Zustand |

## Patentansprüche

1. Betriebsverfahren für ein Mobilfunk-Endgerät, umfassend:
- Periodisches Unterbrechen (210) eines inaktiven Zustandes des Mobilfunk-Endgeräts zum Prüfen, ob an das Mobilfunk-Endgerät gerichtete Signale von einer externen Basisstation her empfangen werden,
- wobei das periodische Prüfen in Zeitabständen einer dem Mobilfunk-Endgerät individuell zugeordneten Periodendauer (DRX') durchgeführt wird,
**dadurch gekennzeichnet, dass**
das Mobilfunk-Endgerät während oder nach einer Anmeldung des Mobilfunk-Endgeräts bei der externen Basisstation einen dem Mobilfunk-Endgerät zugeordneten Geräteparameter an die externe Basisstation übermittelt (702), der genau einen von zwei möglichen Geräteparameter-Werten hat, die anzeigen, ob das Mobilfunk-Endgerät dauerhaft ortsfest oder nicht dauerhaft ortsfest ist, und dass
- die Periodendauer von dem Geräteparameter-Wert abhängt, der anzeigt, ob das Mobilfunk-Endgerät dauerhaft ortsfest oder nicht dauerhaft ortsfest ist.

2. Betriebsverfahren nach Anspruch 1, bei dem
die die dem Mobilfunk-Endgerät zugeordnete Periodendauer (DRX') einen ersten Periodendauer-Wert hat, wenn der dem Mobilfunk-Endgerät zugeordnete Geräteparameter-Wert anzeigt, dass das Mobilfunk-Endgerät dauerhaft ortsfest ist, und die Periodendauer andernfalls einen im Vergleich mit dem ersten Periodendauer-Wert kleineren zweiten Periodendauer-Wert hat.

3. Betriebsverfahren nach einem der vorstehenden Ansprüche, bei dem in Abhängigkeit der Periodendauer (DRX') Messungen durchgeführt werden.

4. Betriebsverfahren nach einem der vorstehenden Ansprüche, bei dem die Periodendauer (DRX') zusätzlich von mindestens einem aktuellen Wert eines Zustandsparameters abhängt, der einen aktuellen Zustand des Mobilfunk-Endgeräts anzeigt.

5. Betriebsverfahren nach Anspruch 4, bei dem die Periodendauer (DRX') je nach Kombination des Geräteparameter-Werts und des aktuellen Zustandsparameter-Werts aus einer Anzahl von mehr als zwei Periodendauer-Werten ausgewählt wird.

6. Betriebsverfahren nach Anspruch 5, bei dem der Geräteparameter und der mindestens eine Zustandsparameter einer Priorisierung solcher Art unterliegen, dass derjenige der beiden Parameter, dessen ermitteltem aktuellen Wert eine längere Periodendauer zugeordnet ist, bei der Zuordnung der Periodendauer gegenüber anderen Parametern stärker gewichtet wird.

7. Betriebsverfahren nach einem der Ansprüche 1 bis 6, bei dem das Mobilfunk-Endgerät die ihm zugeordnete Periodendauer (DRX') von der externen Basisstation empfängt.

8. Betriebsverfahren nach einem der Ansprüche 1 bis 7, bei dem das Mobilfunk-Endgerät den Periodendauer-Wert intern ermittelt.

9. Betriebsverfahren nach einem der vorstehenden Ansprüche, umfassend:
- Regelmäßig wiederholtes Übermitteln (608) eines jeweils aktuellen Kanalqualität-Indikators vom Mobilfunk-Endgerät an eine externe Basisstation, wobei der Kanalqualität-Indikator ein Maß für einen Signal-zu-Rauschabstand oder für einen Signal-zu-Rausch-plus-Interferenz-Abstand eines Kanals ist, auf dem das Mobilfunk-Endgerät an das Mobilfunk-Endgerät gerichtete Funksignale von der externen Basisstation her empfängt, und
- wobei die Übermittlungen (608) mit einem dem Mobilfunk-Endgerät individuell zugeordneten Zeitabstand zu einander durchgeführt werden, der von dem Geräteparameter-Wert abhängt, welcher anzeigt, ob das Mobilfunk-Endgerät dauerhaft ortsfest oder nicht dauerhaft ortsfest ist.

10. Betriebsverfahren nach Anspruch 9, bei dem
- das Mobilfunk-Endgerät den ihm zugewiesenen Zeitabstand zwischen aufeinanderfolgenden Übermittlungen entweder von einer zugeordneten externen Basisstation her empfängt (604) oder intern ermittelt.

11. Betriebsverfahren nach einem der vorstehenden Ansprüche, umfassend:
- Ermitteln (702) des Geräteparameter-Werts, der anzeigt, ob das Mobilfunk-Endgerät dauerhaft ortsfest oder nicht dauerhaft ortsfest ist;
- Wechseln von einem aktiven Zustand in einen inaktiven Zustand;
- ausschließlich in demjenigen Fall, in dem der Geräteparameter-Wert anzeigt, dass das Mobilfunk-Endgerät nicht dauerhaft ortsfest ist, und in dem das Mobilfunk-Endgerät in dem inaktiven Zustand ist: Periodisches Durchführen (708) eines Zell-Auswahl oder Zell-Neuauswahl-Prozesses des Mobilfunk-Endgeräts, wobei eine aus einer Vielzahl empfangbarer Basisstationen zur Kommunikation mit dem Mobilfunk-Endgerät nach Übergang in einen aktiven Zustand des Mobilfunk-Endgeräts ausgewählt wird;
- ausschließlich in demjenigen Fall, in dem der Geräteparameter-Wert anzeigt, dass das Mobilfunk-Endgerät dauerhaft ortsfest ist, und in dem das Mobilfunk-Endgerät in dem inaktiven Zustand ist: Unterlassen der Durchführung des Zell-Auswahl oder Zell-Neuauswahl-Prozesses im inaktiven Zustand des Mobilfunk-Endgeräts.

12. Mobilfunk-Endgerät, mit
- einer Endgerät-Steuereinheit, die ausgebildet ist, eine Ausführung mindestens eines Betriebsschritts beim Betrieb des Mobilfunk-Endgeräts zu steuern, und mit
- einer Empfangseinheit, bei dem
- die Endgerät-Steuereinheit ausgebildet ist, die Empfangseinheit von einem inaktiven Betriebszustand des Mobilfunk-Endgeräts periodisch mit einer vorbestimmten Periodendauer in einen aktiven Betriebszustand zu schalten, d.h., zu aktivieren;
- die Empfangseinheit ausgebildet ist, im aktiven Betriebszustand zu prüfen, ob an das Mobilfunk-Endgerät gerichtete Signale von einer externen Basisstation her empfangen werden, **dadurch gekennzeichnet, dass**
- die Endgerät-Steuereinheit ausgebildet ist,
- während oder nach einer Anmeldung des Mobilfunk-Endgeräts bei der externen Basisstation einen dem Mobilfunk-Endgerät zugeordneten Geräteparameter an die externe Basisstation zu übermitteln (702), der genau einen von zwei möglichen Geräteparameter-Werten hat, die anzeigen, ob das Mobilfunk-Endgerät dauerhaft ortsfest oder nicht dauerhaft ortsfest ist,
- im inaktiven Betriebszustand das Aktivieren der Empfangseinheit mit einer dem Mobilfunk-Endgerät individuell zugeordneten Periodendauer durchzuführen, die von dem Geräteparameter-Wert abhängt, der anzeigt, ob das Mobilfunk-Endgerät dauerhaft ortsfest oder nicht dauerhaft ortsfest ist.

13. Mobilfunk-Endgerät nach Anspruch 12, bei dem die Endgerät-Steuereinheit ausgebildet ist, die dem Mobilfunk-Endgerät zugewiesene Periodendauer entweder aus von der externen Basisstation her empfangenen Steuersignalen zu ermitteln oder intern zu ermitteln.

14. Mobilfunk-Endgerät nach einem der Ansprüche 12 oder 13, mit einer Empfangseinheit und einer Sendeeinheit, bei dem die Endgerät-Steuereinheit ausgebildet ist,
- regelmäßig wiederholt einen unter Verwendung der Empfangseinheit ermittelten, jeweils aktuellen Kanalqualität-Indikator an eine externe Basisstation zu übermitteln, wobei der Kanalqualität-Indikator ein Maß für einen Signal-zu-Rauschabstand oder für einen Signal-zu-Rausch-plus-Interferenz-Abstand eines Kanals ist, auf dem das Mobilfunk-Endgerät an das Mobilfunk-Endgerät gerichtete Funksignale von der externen Basisstation her empfängt, und
- die Übermittlungen mit einem dem Mobilfunk-Endgerät individuell zugeordneten Zeitabstand zu einander durchzuführen, der von dem Geräteparameter-Wert abhängt, welcher anzeigt, ob das Mobilfunk-Endgerät dauerhaft ortsfest oder nicht dauerhaft ortsfest ist.

15. Mobilfunk-Endgerät nach einem der Ansprüche 12 bis 14, bei dem die Endgerät-Steuereinheit ausgebildet ist,
- den Geräteparameter-Wert, der anzeigt, ob das Mobilfunk-Endgerät dauerhaft ortsfest oder nicht dauerhaft ortsfest ist, zu ermitteln;
- das Mobilfunk-Endgerät von einem aktiven Betriebszustand in einen inaktiven Betriebszustand zu schalten;
- ausschließlich in demjenigen Fall, in dem der Geräteparameter-Wert anzeigt, dass das Mobilfunk-Endgerät nicht dauerhaft ortsfest ist, und in dem das Mobilfunk-Endgerät in dem inaktiven Zustand ist: ein Zell-Auswahl oder Zell-Neuauswahl-Prozesses des Mobilfunk-Endgeräts periodisch durchzuführen, wobei eine aus einer Vielzahl empfangbarer Basisstationen zur Kommunikation mit dem Mobilfunk-Endgerät nach Übergang in einen aktiven Zustand des Mobilfunk-Endgeräts ausgewählt wird;
- ausschließlich in demjenigen Fall, in dem der Geräteparameter-Wert anzeigt, dass das Mobilfunk-Endgerät dauerhaft ortsfest ist, und in dem das Mobilfunk-Endgerät in dem inaktiven Zustand ist: die Durchführung des Zell-Auswahl oder Zell-Neuauswahl-Prozesses im inaktiven Zustand des Mobilfunk-Endgeräts zu unterlassen.

16. Betriebsverfahren für eine Basisstation, umfassend:
- Zuweisen einer Periodendauer an ein externes Mobilfunk-Endgerät für ein periodisches Prüfen auf Seiten des Mobilfunk-Endgeräts in dafür vorgesehenen Unterbrechungen eines inaktiven Zustands des Mobilfunk-Endgeräts, ob an das Mobilfunk-Endgerät gerichtete Signale von der Basisstation her empfangen werden,
- **gekennzeichnet durch**
- Empfangen eines dem externen Mobilfunk-Endgerät zugeordneten Geräteparameters während oder nach einer Anmeldung des Mobilfunk-Endgeräts bei der Basisstation (702) von dem externen Mobilfunk-Endgerät her, wobei der Geräteparameter genau einen von zwei möglichen Geräteparameter-Werten hat, die anzeigen, ob das Mobilfunk-Endgerät dauerhaft ortsfest oder nicht dauerhaft ortsfest ist; und
- Zuweisen Periodendauer an das externe Mobilfunk-Endgerät in Abhängigkeit von dem dem Mobilfunk-Endgerät zugeordneten Geräteparameter-Wert, der anzeigt, ob das Mobilfunk-Endgerät dauerhaft ortsfest oder nicht dauerhaft ortsfest ist.

17. Betriebsverfahren nach Anspruch 16, mit den Schritten
- Regelmäßig wiederholtes Empfangen eines vom Mobilfunk-Endgerät her übermittelten, jeweils aktuellen Kanalqualität-Indikators, wobei der Kanalqualität-Indikator ein Maß für einen Signal-zu-Rauschabstand oder für einen Signal-zu-Rausch-plus-Interferenz-Abstand eines Kanals ist, auf dem das Mobilfunk-Endgerät an das Mobilfunk-Endgerät gerichtete Funksignale von der Basisstation her empfängt, und
- Individuelles Zuweisen eines Zeitabstands zwischen den Übermittlungen an das Mobilfunk-Endgerät, der von dem Geräteparameter-Wert abhängt, welcher anzeigt, ob das Mobilfunk-Endgerät dauerhaft ortsfest oder nicht dauerhaft ortsfest ist.

18. Basisstation, umfassend
- eine Sendeeinheit
- eine Basisstation-Steuereinheit, die mit der Sendeeinheit verbunden und ausgebildet ist, mindestens einen Verfahrensparameter-Wert an ein mit der Basisstation in Kommunikationsverbindung stehendes externes Mobilfunk-Endgerät zu senden, wobei
- der Verfahrensparameter-Wert eine Ausführung mindestens eines Betriebsverfahrensschritts des Mobilfunk-Endgeräts beeinflusst, und wobei
- der Verfahrensparameter-Wert eine Periodendauer für ein periodisches Prüfen auf Seiten des Mobilfunk-Endgeräts in dafür vorgesehenen Unterbrechungen eines inaktiven Zustands des Mobilfunk-Endgeräts ist, ob an das Mobilfunk-Endgerät gerichtete Signale empfangen werden,
- **dadurch gekennzeichnet, dass**
- die Periodendauer von einem vom Mobilfunk-Endgerät her während oder nach einer Anmeldung des Mobilfunk-Endgeräts bei der Basisstation empfangenen und dem Mobilfunk-Endgerät zugeordneten Geräteparameter abhängig ist, der genau einen von zwei möglichen Geräteparameter-Werten hat, die anzeigen, ob das Mobilfunk-Endgerät dauerhaft ortsfest oder nicht dauerhaft ortsfest ist.

19. Computerprogrammprodukt, enthaltend ausführbaren Programmcode, der ausgebildet ist, nach Installation in einem Programmspeicher eines programmierbaren Prozessors eines Mobilfunk-Endgeräts dieses zur Ausführung eines Programms zu veranlassen, das ein Verfahren nach einem der Ansprüche 1 bis 11 ausführt.

20. Betriebsverfahren für einen Core-Netzwerkknoten eines Mobilfunk-Netzwerkes, umfassend:
- Zuweisen mindestens eines Verfahrensparameter-Wertes an eine Basisstation zur Übermittlung des Verfahrensparameter-Wertes an ein mit der Basisstation in Kommunikationsverbindung stehendes Mobilfunk-Endgerät, für eine Ausführung mindestens eines Betriebsverfahrensschritts des Mobilfunk-Endgeräts, wobei
- der Verfahrensparameter-Wert eine Periodendauer für ein periodisches Prüfen auf Seiten des Mobilfunk-Endgeräts in dafür vorgesehenen Unterbrechungen eines inaktiven Zustands des Mobilfunk-Endgeräts ist, ob an das Mobilfunk-Endgerät gerichtete Signale empfangen werden, **dadurch gekennzeichnet, dass**
- die zugewiesene Periodendauer von einem vom Mobilfunk-Endgerät her während oder nach einer Anmeldung des Mobilfunk-Endgeräts bei der von der Basisstation empfangenen und dem Mobilfunk-Endgerät zugeordneten Geräteparameter abhängig ist, der genau einen von zwei möglichen Geräteparameter-Werten hat, die anzeigen, ob das Mobilfunk-Endgerät dauerhaft ortsfest oder nicht dauerhaft ortsfest ist.

## Claims

1. An operating method for a mobile radio terminal, comprising:
- periodic interruption (210) of an inactive state of the mobile radio terminal to check whether signals directed to the mobile radio terminal from an external base station are received,
- wherein the periodic checking is carried out at time intervals of a periodic time (DRX') individually associated with the mobile radio terminal, **characterised in that**
- the mobile radio terminal, during or after its log-on at the external base station, transmits (702) to the external base station a device parameter that is associated with the mobile radio terminal and has precisely one of two possible device-parameter values that indicate whether the mobile radio terminal is permanently stationary or is not permanently stationary, and **in that**
- the periodic time is dependent on the device-parameter value that indicates whether the mobile radio terminal is permanently stationary or is not permanently stationary.

2. An operating method according to claim 1, in which the periodic time (DRX') associated with the mobile radio terminal has a first periodic-time value if the device-parameter value associated with the mobile radio terminal indicates that the mobile radio terminal is permanently stationary, and the periodic time otherwise has a second periodic-time value which is smaller when compared with the first periodic-time value.

3. An operating method according to one of the preceding claims, in which measurements are carried out as a function of the periodic time (DRX').

4. An operating method according to one of the preceding claims, in which the periodic time (DRX') is additionally dependent on at least one current value of a status parameter that indicates a current state of the mobile radio terminal.

5. An operating method according to claim 4, in which the periodic time (DRX') is selected, according to a combination of the device-parameter value and the current status-parameter value, from a number of more than two periodic-time values.

6. An operating method according to claim 5, in which the device parameter and the at least one status parameter are subject to a prioritization of such a kind that of the two parameters the one with whose determined current value a longer periodic time is associated is weighted to a greater extent than other parameters during the association of the periodic time.

7. An operating method according to one of claims 1 to 6, in which the mobile radio terminal receives the periodic time (DRX') associated with it from the external base station.

8. An operating method according to one of claims 1 to 7, in which the mobile radio terminal determines the periodic-time value internally.

9. An operating method according to one of the preceding claims, comprising:
- regularly repeated transmission (608) of a respective current channel-quality indicator from the mobile radio terminal to an external base station, wherein the channel-quality indicator is a measure of a signal-to-noise ratio or of a signal-to-noise-plus-interference ratio of a channel on which the mobile radio terminal receives radio signals, directed to the mobile radio terminal, from the external base station, and
- wherein the transmissions (608) are carried out with a time interval with respect to each other that is individually associated with the mobile radio terminal and is dependent on the device-parameter value that indicates whether the mobile radio terminal is permanently stationary or is not permanently stationary.

10. An operating method according to claim 9, in which
- the mobile radio terminal either receives (604) the time interval between successive transmissions allocated to it from an associated external base station or determines it internally.

11. An operating method according to one of the preceding claims, comprising:
- determination (702) of the device-parameter value that indicates whether the mobile radio terminal is permanently stationary or is not permanently stationary;
- change from an active state into an inactive state;
- exclusively in that case in which the device-parameter value indicates that the mobile radio terminal is not permanently stationary and in which the mobile radio terminal is in the inactive state: periodic carrying out (708) of a cell-selection or cell-reselection process of the mobile radio terminal, wherein one of a plurality of receivable base stations is selected for communication with the mobile radio terminal after transition into an active state of the mobile radio terminal;
- exclusively in that case in which the device-parameter value indicates that the mobile radio terminal is permanently stationary and in which the mobile radio terminal is in the inactive state: discontinuation of the carrying out of the cell-selection or cell-reselection process in the inactive state of the mobile radio terminal.

12. A mobile radio terminal, having
- a terminal control unit which is designed to control an execution of at least one operating step during the operation of the mobile radio terminal, and having
- a receiving unit, in which
- the terminal control unit is designed to switch the receiving unit from an inactive operating state of the mobile radio terminal periodically with a predetermined periodic time into an active operating state, that is, to activate it;
- the receiving unit is designed to check in the active operating state whether signals directed to the mobile radio terminal from an external base station are received, **characterised in that**
- the terminal control unit is designed
- to transmit (702) to the external base station, during or after a log-on of the mobile radio terminal at the external base station, a device parameter that is associated with the mobile radio terminal and has precisely one of two possible device-parameter values that indicate whether the mobile radio terminal is permanently stationary or is not permanently stationary,
- to carry out in the inactive operating state the activation of the receiving unit with a periodic time that is individually associated with the mobile radio terminal and is dependent on the device-parameter value that indicates whether the mobile radio terminal is permanently stationary or is not permanently stationary.

13. A mobile radio terminal according to claim 12, in which the terminal control unit is configured either to determine the periodic time allocated to the mobile radio terminal from control signals received from the external base station or to determine it internally.

14. A mobile radio terminal according to one of claims 12 or 13, having a receiving unit and a transmitting unit, in which the terminal control unit is configured
- to transmit with regular repetition to an external base station a respective current channel-quality indicator determined with use of the receiving unit, wherein the channel-quality indicator is a measure of a signal-to-noise ratio or of a signal-to-noise-plus-interference ratio of a channel on which the mobile radio terminal receives radio signals, directed to the mobile radio terminal, from the external base station, and
- to carry out the transmissions with a time interval with respect to each other that is individually associated with the mobile radio terminal and is dependent on the device-parameter value that indicates whether the mobile radio terminal is permanently stationary or is not permanently stationary.

15. A mobile radio terminal according to one of claims 12 to 14, in which the terminal control unit is configured
- to determine the device-parameter value that indicates whether the mobile radio terminal is permanently stationary or is not permanently stationary;
- to switch the mobile radio terminal from an active operating state into an inactive operating state;
- exclusively in that case in which the device-parameter value indicates that the mobile radio terminal is not permanently stationary and in which the mobile radio terminal is in the inactive state: to carry out periodically a cell-selection or cell-reselection process of the mobile radio terminal, wherein one of a plurality of receivable base stations is selected for communication with the mobile radio terminal after transition into an active state of the mobile radio terminal;
- exclusively in that case in which the device-parameter value indicates that the mobile radio terminal is permanently stationary and in which the mobile radio terminal is in the inactive state: to discontinue carrying out the cell-selection or cell-reselection process in the inactive state of the mobile radio terminal.

16. An operating method for a base station, comprising:
- allocation of a periodic time to an external mobile radio terminal for periodic checking, on the part of the mobile radio terminal in interruptions of an inactive state of the mobile radio terminal that are provided therefor, whether signals directed to the mobile radio terminal from the base station are received,
- **characterised by**
- reception of a device parameter associated with the external mobile radio terminal during or after a log-on of the mobile radio terminal at the base station (702) from the external mobile radio terminal, wherein the device parameter has precisely one of two possible device-parameter values that indicate whether the mobile radio terminal is permanently stationary or is not permanently stationary; and
- allocation of a periodic time to the external mobile radio terminal as a function of the device-parameter value associated with the mobile radio terminal that indicates whether the mobile radio terminal is permanently stationary or is not permanently stationary.

17. An operating method according to claim 16, having the steps
- regularly repeated reception of a respective current channel-quality indicator transmitted from the mobile radio terminal, wherein the channel-quality indicator is a measure of a signal-to-noise ratio or of a signal-to-noise-plus-interference ratio of a channel on which the mobile radio terminal receives radio signals, directed to the mobile radio terminal, from the base station, and
- individual allocation of a time interval between the transmissions to the mobile radio terminal that is dependent on the device-parameter value which indicates whether the mobile radio terminal is permanently stationary or is not permanently stationary.

18. A base station, comprising
- a transmitting unit
- a base-station control unit which is connected to the transmitting unit and is configured to transmit at least one method-parameter value to an external mobile radio terminal in communication with the base station, wherein
- the method-parameter value influences execution of at least one operating-method step of the mobile radio terminal, and wherein
- the method-parameter value is a periodic time for a periodic check, on the part of the mobile radio terminal in interruptions of an inactive state of the mobile radio terminal that are provided therefor, whether signals directed to the mobile radio terminal are received,
- **characterised in that**
- the periodic time is dependent on a device parameter that is received from the mobile radio terminal during or after its log-on at the base station, is associated with the mobile radio terminal and has precisely one of two possible device-parameter values that indicate whether the mobile radio terminal is permanently stationary or is not permanently stationary.

19. A computer-program product, containing executable program code, which is designed, after installation in a program memory of a programmable processor of a mobile radio terminal, to cause the latter to execute a program that executes a method according to one of claims 1 to 11.

20. An operating method for a core network node of a mobile radio network, comprising:
- allocation of at least one method-parameter value to a base station for the transmission of the method-parameter value to a mobile radio terminal, which is in communication with the base station, for execution of at least one operating-method step of the mobile radio terminal, wherein
- the method-parameter value is a periodic time for a periodic check, on the part of the mobile radio terminal in interruptions of an inactive state of the mobile radio terminal that are provided therefor, whether signals directed to the mobile radio terminal are received, **characterised in that**
- the allocated periodic time is dependent on a device parameter that is received from the mobile radio terminal during or after its log-on at the base station, is associated with the mobile radio terminal and has precisely one of two possible device-parameter values that indicate whether the mobile radio terminal is permanently stationary or is not permanently stationary.

## Revendications

1. Procédé pour faire fonctionner un terminal de téléphonie mobile, dans lequel :
- on interrompt (210) périodiquement un état inactif du terminal de téléphonie mobile pour contrôler si des signaux envoyés au terminal de téléphonie mobile sont reçus par une station de base extérieure,
- dans lequel on effectue le contrôle périodique dans des intervalles de temps d'une période (DRX') associée individuellement au terminal de téléphonie mobile, **caractérisé en ce que**
le terminal de téléphonie mobile transmet (702) à la station de base extérieure, pendant ou après une demande du terminal de téléphonie mobile auprès de la station de base extérieure, un paramètre d'appareil associé au terminal de téléphonie mobile qui a exactement l'une de deux valeurs possibles de paramètre d'appareil, qui indiquant si le terminal de téléphonie mobile est à poste fixe en permanence ou n'est pas à poste fixe en permanence, et **en ce que**
- la période dépend de la valeur du paramètre d'appareil, qui indique si le terminal de téléphonie mobile est à poste fixe en permanence ou n'est pas à poste fixe en permanence.

2. Procédé suivant la revendication 1, dans lequel la période (DRX') associée au terminal de téléphonie mobile a une première valeur si la valeur du paramètre d'appareil associée au terminal de téléphonie mobile indique que le terminal de téléphonie mobile est à poste fixe en permanence, et la période sinon a une deuxième valeur plus petite que la première valeur.

3. Procédé suivant l'une des revendications précédentes, dans lequel on effectue des mesures en fonction de la période (DRX').

4. Procédé suivant l'une des revendications précédentes, dans lequel la période (DRX') dépend en plus d'au moins une valeur instantanée d'un paramètre d'état, qui indique un état instantané du terminal de téléphonie mobile.

5. Procédé suivant la revendication 4, dans lequel la période (DRX') est choisie en fonction d'une combinaison de la valeur du paramètre d'appareil et de la valeur instantanée du paramètre d'état parmi un nombre de plus de deux valeurs de période.

6. Procédé suivant la revendication 5, dans lequel le paramètre d'appareil et le au moins un paramètre d'état sont soumis à une mise en priorité de manière à ce que celui des deux paramètres, à la valeur instantanée déterminée duquel est associée une période plus longue, soit pondéré davantage que l'autre paramètre pour l'association de la période.

7. Procédé suivant l'une des revendications 1 à 6, dans lequel le terminal de téléphonie mobile reçoit de la station de base extérieure la période (DRX') qui lui est associée.

8. Procédé suivant l'une des revendications 1 à 7, dans lequel le terminal de téléphonie mobile détermine de manière interne la période.

9. Procédé suivant l'une des revendications précédentes, dans lequel :
- on transmet (608), de manière répétée régulièrement un indicateur de qualité instantanée du canal, du terminal de téléphonie mobile à une station de base extérieure, l'indicateur de qualité du canal étant une mesure d'un écart signal à bruit ou d'un écart signal à bruit plus interférence d'un canal sur lequel le terminal de téléphonie mobile reçoit de la station de base extérieure des signaux radio dirigées vers le terminal de téléphonie mobile, et
- les transmissions (608) étant effectuées avec un intervalle de temps entre elles associé individuellement au terminal de téléphonie mobile, qui dépend de la valeur du paramètre d'appareil, qui indique si le terminal de téléphonie mobile est à poste fixe en permanence ou n'est pas à poste fixe en permanence.

10. Procédé suivant la revendication 9, dans lequel
- l'appareil de téléphonie mobile reçoit (604) d'une station de base extérieure associée ou détermine en interne l'intervalle de temps, qui lui est affecté entre des transmissions successives.

11. Procédé suivant l'une des revendications précédentes, dans lequel :
- on détermine (702) la valeur du paramètre d'appareil, qui indique si le terminal de téléphonie mobile est à poste fixe en permanence ou n'est pas à poste fixe en permanence ;
- on passe d'un état actif à un état inactif ;
- exclusivement dans le cas dans lequel la valeur du paramètre d'appareil indique que le terminal de téléphonie mobile n'est pas à poste fixe en permanence et dans lequel le terminal de téléphonie mobile est dans l'état inactif :
on effectue (708) périodiquement une sélection de cellule ou une opération de nouvelle sélection de cellule du terminal de téléphonie mobile, l'une d'une pluralité de stations de base pouvant recevoir était sélectionnée pour la communication avec le terminal de téléphonie mobile après passage dans un état actif du terminal de téléphonie mobile ;
- exclusivement dans le cas dans lequel la valeur du paramètre d'appareil indique que le terminal de téléphonie mobile est à poste fixe en permanence et dans lequel le terminal de téléphonie mobile est à l'état inactif : on omet d'effectuer la sélection de cellule ou le processus de nouvelle sélection de cellule dans l'état inactif du terminal de téléphonie mobile.

12. Terminal de téléphonie mobile, comprenant
- une unité de commande de terminal, qui est constituée pour commander une exécution d'au moins un stade de fonctionnement lors du fonctionnement du terminal de téléphonie mobile, et comprenant
- une unité de déception, dans lequel
- l'unité de commande de terminal est constituée pour faire passer l'unité de réception d'un état de fonctionnement inactif du terminal de téléphonie mobile périodiquement avec une période déterminée à l'avance dans un état de fonctionnement actif, c'est-à-dire de l'activer ;
- l'unité de réception est constituée pour contrôler dans l'état de fonctionnement actif si des signaux envoyés au terminal de téléphonie mobile sont reçus par une station de base extérieure, **caractérisée en ce que**
- l'unité de commande du terminal est constituée,
- pour transmettre (702), pendant ou après une demande du terminal de téléphonie mobile auprès de la station de base extérieure, un paramètre d'appareil associé au terminal de téléphonie mobile, qui a exactement l'une de deux valeurs possibles de paramètre d'appareil, qui indiquent si le terminal de téléphonie mobile est à poste fixe en permanence ou n'est pas à poste fixe en permanence ;
- pour, dans l'état de fonctionnement inactif, effectuer l'activation de l'unité de réception avec une période associée individuellement au terminal de téléphonie mobile, qui dépend de la valeur du paramètre d'appareil, qui indique si le terminal de téléphonie mobile est à poste fixe en permanence ou n'est pas à poste fixe en permanence.

13. Terminal de téléphonie mobile suivant la revendication 12, dans lequel l'unité de commande de terminal est constituée pour déterminer à partir de signaux de commande reçus par la station de base extérieure ou pour déterminer en interne la période affectée au terminal de téléphonie mobile.

14. Terminal de téléphonie mobile suivant l'une des revendications 12 ou 13, comprenant une unité de réception et une unité d'émission, dans lequel l'unité de commande de terminal est constituée,
- pour transmettre, de manière répétée régulièrement, un indicateur de qualité instantanée du canal du terminal de téléphonie mobile, déterminé en utilisant l'unité de réception, à une station de base extérieure, l'indicateur de qualité du canal étant une mesure d'un écart signal à bruit ou d'un écart signal à bruit plus interférence d'un canal sur lequel le terminal de téléphonie mobile reçoit de la station de base extérieure des signaux radio dirigés vers le terminal de téléphonie mobile, et
- pour effectuer les transmissions avec un intervalle de temps entre elles associé individuellement au terminal de téléphonie mobile, qui dépend de la valeur du paramètre d'appareil, qui indique si le terminal de téléphonie mobile est à poste fixe en permanence ou n'est pas à poste fixe en permanence.

15. Terminal de téléphonie mobile suivant l'une des revendications 12 à 14, dans lequel l'unité de commande du terminal est constituée,
- pour déterminer la valeur du paramètre d'appareil, qui indique si le terminal de téléphonie mobile est à poste fixe en permanence ou n'est pas à poste fixe en permanence ;
- pour faire passer le terminal de téléphonie mobile d'un état de fonctionnement actif à un état de fonctionnement inactif ;
- pour, exclusivement dans le cas dans lequel la valeur du paramètre d'appareil indique que le terminal de téléphonie mobile n'est pas à poste fixe en permanence et dans lequel le terminal de téléphonie mobile est dans l'état inactif : effectuer périodiquement une sélection de cellule ou une opération de nouvelle sélection de cellule du terminal de téléphonie mobile, l'une d'une pluralité de stations de base pouvant recevoir étant sélectionnée pour la communication avec le terminal de téléphonie mobile après passage dans un état actif du terminal de téléphonie mobile ;
- pour, exclusivement dans le cas dans lequel la valeur du paramètre d'appareil indique que le terminal de téléphonie mobile est à poste fixe en permanence et dans lequel le terminal de téléphonie mobile est à l'état inactif omettre d'effectuer la sélection de cellule ou le processus de nouvelle sélection de cellule dans l'état inactif du terminal de téléphonie mobile.

16. Procédé pour faire fonctionner une station de base dans lequel :
- on affecte une période à un terminal de téléphonie mobile extérieur pour un contrôle périodique du côté du terminal de téléphonie mobile, dans des interruptions prévues à cet effet d'un état inactif du terminal de téléphonie mobile, sur le point de savoir si des signaux envoyés au terminal de téléphonie mobile sont reçus par la station de base,
- **caractérisé par**
- la réception par le terminal de téléphonie mobile extérieur d'un paramètre d'appareil, associé au terminal de téléphonie mobile extérieur, pendant ou après une demande du terminal de téléphonie mobile auprès de la station (702) de base, dans lequel le paramètre d'appareil a exactement l'une de deux valeurs possibles de paramètre d'appareil, qui indiquent si le terminal de téléphonie mobile est à poste fixe en permanence ou n'est pas à poste fixe en permanence, et
- l'affectation d'une période au terminal de téléphonie mobile extérieur en fonction de la valeur de paramètre d'appareil associée au terminal de téléphonie mobile, qui indique si le terminal de téléphonie mobile est à poste fixe en permanence ou n'est pas à poste fixe en permanence.

17. Procédé suivant la revendication 16, comprenant les stades
- de réception, répétée de manière régulière, d'un indicateur de qualité du canal instantanée transmis à partir du terminal de téléphonie mobile, l'indicateur de qualité du canal étant une mesure d'un écart signal à bruit ou d'un écart signal à bruit plus interférence d'un canal sur lequel le terminal de téléphonie mobile reçoit des signaux radio dirigés vers le terminal de téléphonie mobile à partir de la station de base, et
- d'affectation individuelle d'un intervalle de temps entre les transmissions au terminal de téléphonie mobile, qui dépend de la valeur du paramètre d'appareil, qui indique si le terminal de téléphonie mobile est à poste fixe en permanence ou n'est pas à poste fixe en permanence.

18. Station de base comprenant
- une unité de l'émission
- une unité de commande de station de base, qui est reliée à l'unité d'émission et qui est constituée pour envoyer au moins une valeur de paramètre de procédé à un terminal de téléphonie mobile extérieur en liaison de communication avec la station de base, dans laquelle
- la valeur de paramètre de procédé influe sur une exécution d'au moins un stade du procédé pour faire fonctionner le terminal de téléphonie mobile, et dans laquelle
- la valeur du paramètre de procédé est une période pour un contrôle périodique du côté du terminal de téléphonie mobile, dans des interruptions prévues à cet effet d'un état inactif du terminal de téléphonie mobile, sur le point de savoir si des signaux dirigés vers le terminal de téléphonie mobile sont reçus,
- **caractérisée en ce que**
- la période dépend d'un paramètre d'appareil reçu pendant ou après une demande du terminal de téléphonie mobile auprès de la station de base et associé au terminal de téléphonie mobile, paramètre qui a exactement l'une de deux valeurs de paramètre d'appareil possibles, qui indiquent si le terminal de téléphonie mobile est à poste fixe en permanence ou n'est pas à poste fixe en permanence.

19. Produit de programme d'ordinateur, comportant des codes de programme pouvant être exécutés et constitué pour, après installation dans une mémoire de programme d'un processeur programmable d'un terminal de téléphonie mobile, faire que celui-ci exécute un programme qui réalise un procédé suivant l'une des revendications 1 à 11.

20. Procédé pour faire fonctionner un noeud de réseau Core d'un réseau de terminal de téléphonie mobile, comprenant :
- l'affectation d'au moins une valeur de paramètre de procédé à une station de base pour la transmission de la valeur du paramètre de procédé à un terminal de téléphonie mobile en liaison de communication avec la station de base, pour une réalisation d'au moins un stade du procédé du fonctionnement du terminal de téléphonie mobile, dans lequel
- la valeur du paramètre de procédé est une période pour un contrôle périodique du côté du terminal de téléphonie mobile, dans des interruptions prévues à cet effet d'un état inactif du terminal de téléphonie mobile, sur le point de savoir si des signaux dirigés vers le terminal de téléphonie mobile sont reçus, **caractérisé en ce que**
- la période affectée dépend d'un paramètre d'appareil, reçu pendant ou après une demande du terminal de téléphonie mobile auprès de la station de base à partir du terminal de téléphonie mobile et associé au terminal de téléphonie mobile, paramètre qui a exactement deux valeurs de paramètre d'appareil possibles, qui indiquent si le terminal de téléphonie mobile est à poste fixe en permanence ou s'il n'est pas à poste fixe en permanence.
